# EUROPEAN PATENT APPLICATION

(11) **EP 1 619 172 A1**
(43) Date of publication of application: **25.01.2006**
(21) Application number: 03728019.5
(22) Date of filing: 30.04.2003
(51) Int. Cl.: C02F 1/461, C02F 1/68

(54) **MINERAL WATER GENERATOR**

(71) Applicant: Sanden Corporation, Isesaki-shi, Gunma 372-8502 (JP)
(72) Inventor: ITO, Miwako, Isesaki-shi, Gunma 372-8502 (JP); WATANABE, Kazushige, Isesaki-shi, Gunma 372-8502 (JP); SATO, Motoharu, Isesaki-shi, Gunma 372-8502 (JP)
(74) Representative: Haley, Stephen
(86) International application number: PCT/JP2003/005533
(87) International publication number: WO 2004/096716

(57) **Abstract**

A mineral-water producing apparatus that includes: an electrolytic bath to which raw water, such as city water, is supplied; a mineral eluting material(s) arranged in the electrolytic bath; and electrodes for applying DC voltage with which the water in the electrolytic bath is electrolyzed so that a mineral element(s) is eluted from the mineral eluting material(s), where the mineral water produced in the electrolytic bath is delivered to the outside thereof, **characterized in that** the apparatus further includes: a pH sensor which detects the pH of the raw water; and a controller which controls the conducting time duration for the electrodes based on the detection signal from the pH sensor. Thus, mineral water having a desired mineral concentration is produced.

## Description

### Technical Field

This invention relates to a mineral-water producing apparatus which produces mineral-water by adding mineral elements to raw water.

### Background Art

As the above-described type of mineral-water producing apparatus, one has been known which is described in Japanese Patent Publication 9-164390.

This mineral-water producing apparatus includes: an electrolytic bath; a pair of electrodes, cathode and anode, arranged in the electrolytic bath; and a mineral eluting material(s) (coral sand, healstone (bakuhanseki), mineral stone, etc.) contained in the electrolytic bath. According to this apparatus, the application of a DC current to the electrodes causes electrolysis of city water accumulated in the electrolytic bath and produces acid water on the anode side, and the acid water reacts with and dissolves the mineral eluting material (e.g. calcium carbonate) to allow a mineral element to be eluted from the mineral eluting material.

In such an electrolytic type of mineral-water producing apparatus, the concentration of the mineral in the mineral-water produced vary depending on the hydrogen-ion exponent (hereinafter referred to as pH), the temperature, and the mineral concentration of the city water supplied to the electrolytic bath. The reason is that the solubility of mineral eluting materials decreases with the increase in pH or temperature of the city water supplied to the electrolytic bath, and besides, it is largely affected by the mineral concentration of the city water itself.

On the other hand, the pH, the temperature and the mineral concentration of city water differ depending on the area or the season, and moreover, even if the area or the season is the same, they greatly change with time of a day.

Thus, with the conventional mineral-water producing apparatus, in which the power control of electrodes is fixed, it is impossible to adjust the mineral concentration of the mineral water produced to a desired value. As a result, when the mineral water has a low mineral concentration, the taste and the effects of the mineral cannot be obtained. Conversely, when the mineral water has too high a mineral concentration, the eluted mineral can sometimes precipitate and contaminate drinks. Accordingly, the conventional mineral producing apparatus might produce mineral water unsuitable for drinking.

In light of the above described problems with the conventional mineral-water producing apparatus, the object of this invention is to provide a mineral-water producing apparatus which controls conducting time duration or power output for energizing electrodes based on the quality, the temperature, etc. of water, and besides, includes setting switches which can arbitrarily set conducting time duration or power output for energizing electrodes, and thereby providing mineral water having a desired mineral concentration.

### Disclosure of the Invention

A first aspect of this invention is a mineral-water producing apparatus, which includes: an electrolytic bath to which raw water, such as city water, is supplied; a mineral eluting material(s) arranged in the electrolytic bath; and electrodes for applying DC voltage with which water in the electrolytic bath is electrolyzed so that a mineral element(s) is eluted from the mineral eluting material(s), where the mineral water produced in the electrolytic bath is delivered to the outside thereof, characterized in that the apparatus further includes: water-quality etc. detecting means for detecting the water quality, the water temperature, etc. of at least either the raw water or the mineral water; and controlling means for controlling at least either the conducting time duration or the power output for the electrodes based on the detection signals from the water quality etc. detecting means.

According to the first aspect of this invention, the conducting time duration or the power output for energizing electrodes is controlled based on the water quality or the water temperature of raw water, which is the cause of change in the amount of the minerals eluted, whereby the mineral concentration of the mineral water produced is kept constant.

A second aspect of this invention is a mineral-water producing apparatus, which includes: an electrolytic bath to which raw water, such as city water, is supplied; a mineral eluting material(s) arranged in the electrolytic bath; and electrodes for applying DC voltage with which water in the electrolytic bath is electrolyzed so that a mineral element(s) is eluted from the mineral eluting material(s), where mineral water is produced at least either in a flowing water electrolysis mode, in which a DC voltage is applied across the electrodes while delivering the water from the electrolytic bath, or in a standing water electrolysis mode, in which a DC voltage is applied across the electrodes while stopping the water from the electrolytic bath, characterized in that the apparatus further includes a setting switch which sets at least either conducting time duration or power output for the electrodes in each of the electrolysis modes.

According to the second aspect of this invention, the conducting time duration or the power output for energizing electrodes can be arbitrarily set through the setting switch, and the amount of minerals eluted can be controlled depending on the mineral concentration or the water quality of raw water.

### Brief Description of the Drawings

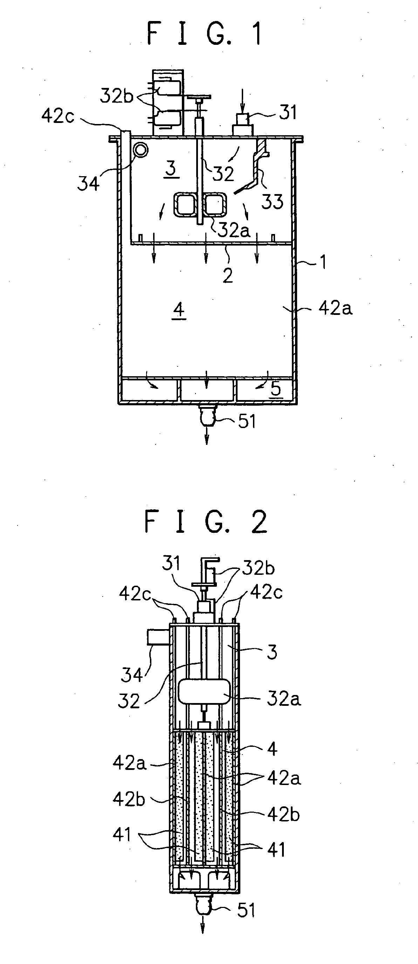

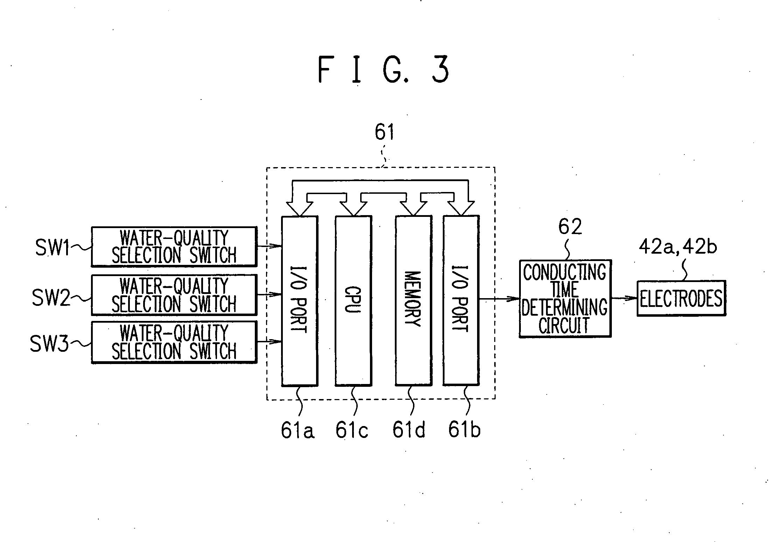

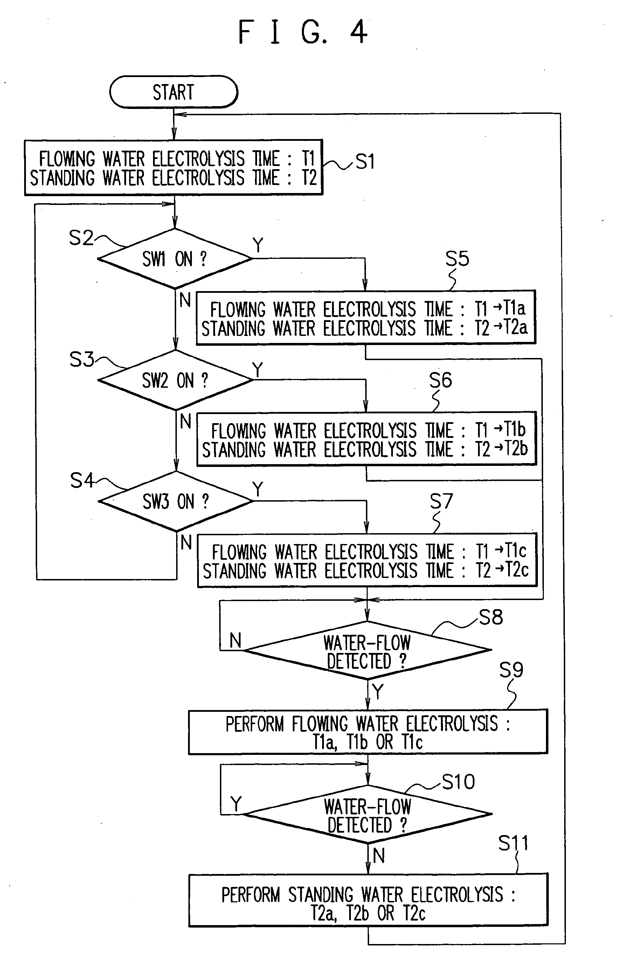

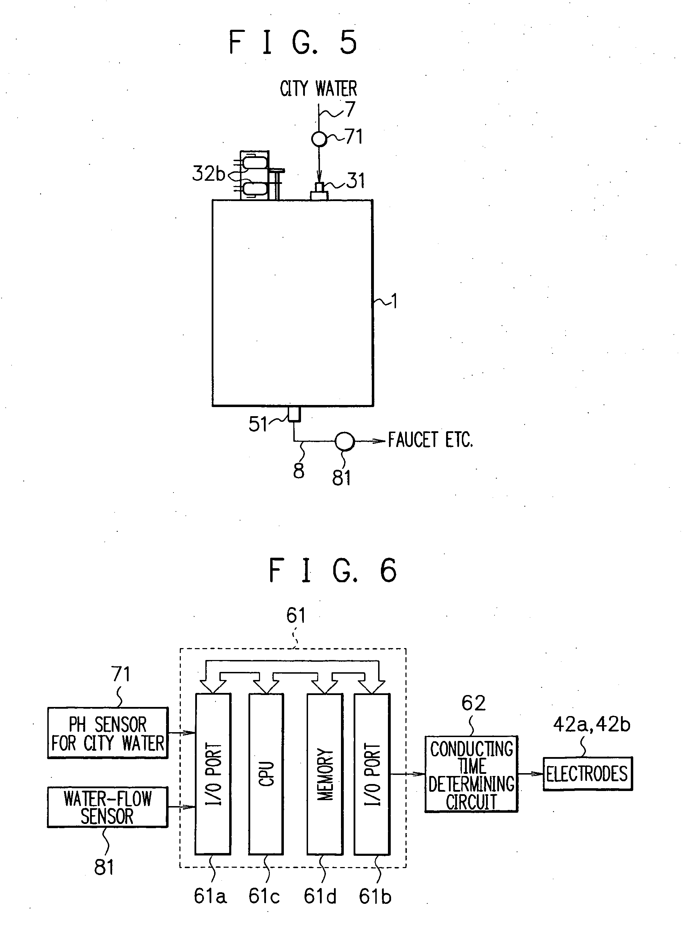

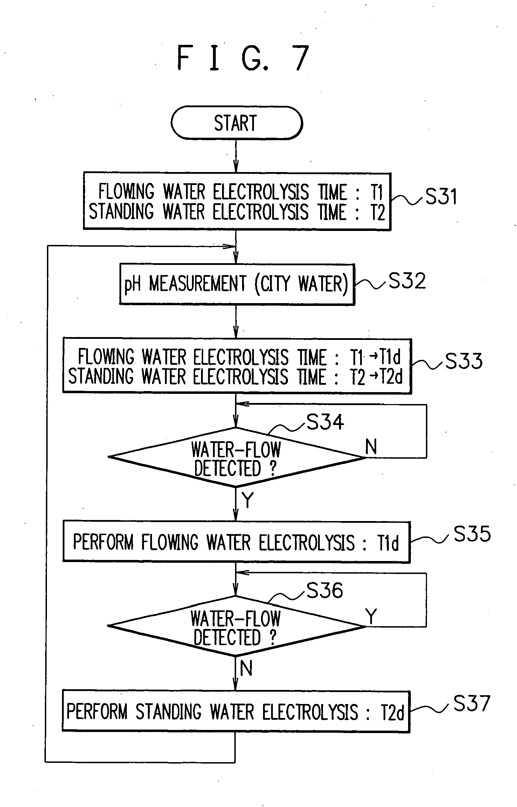

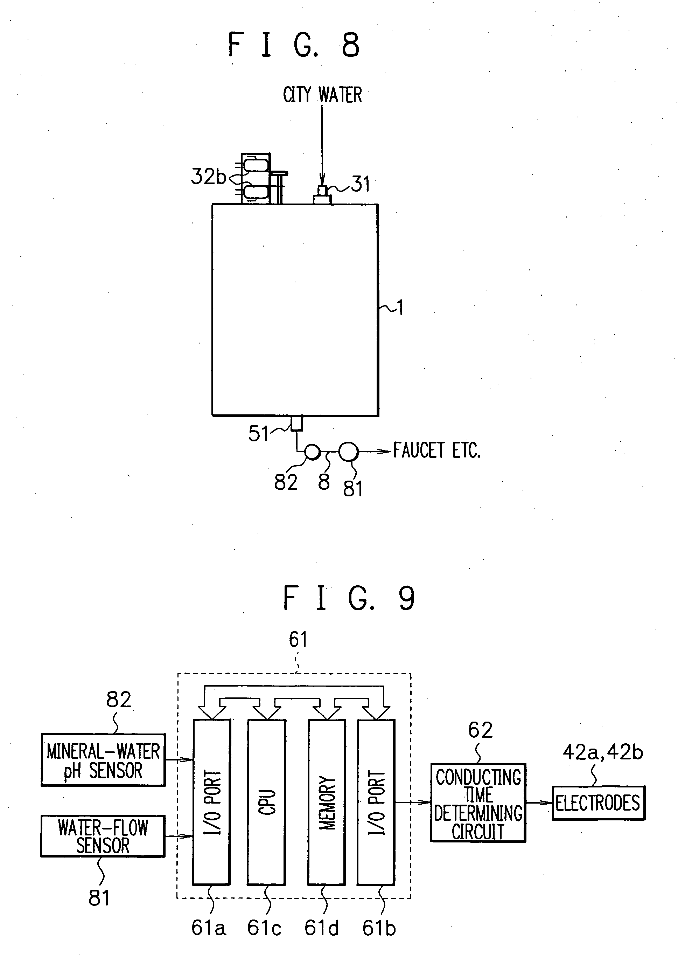

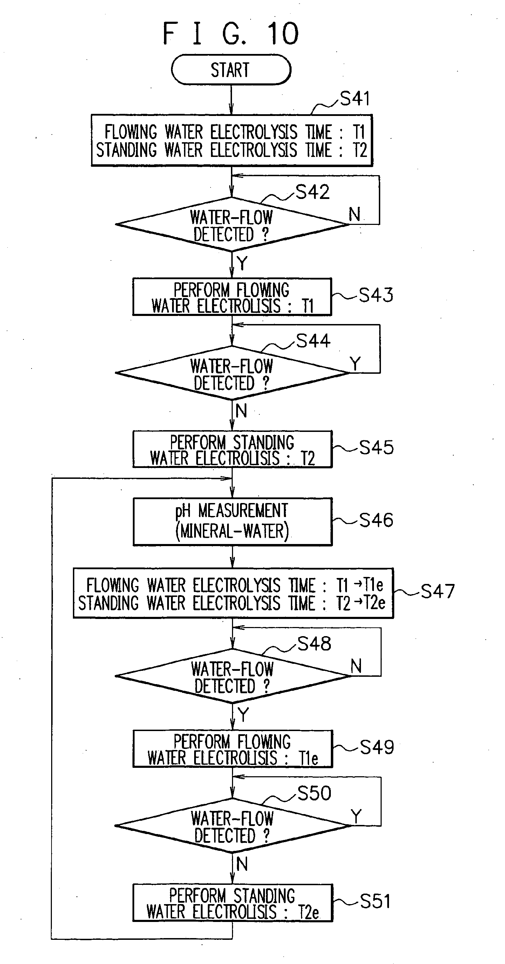

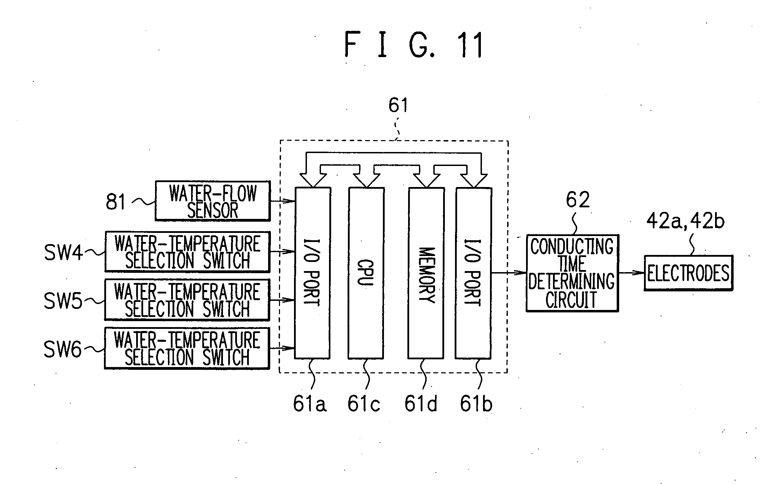

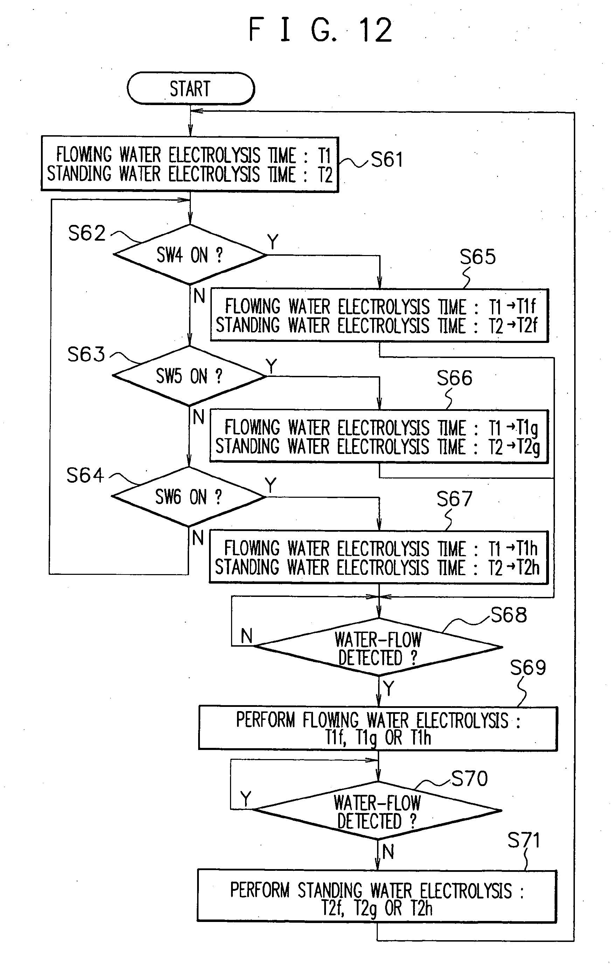

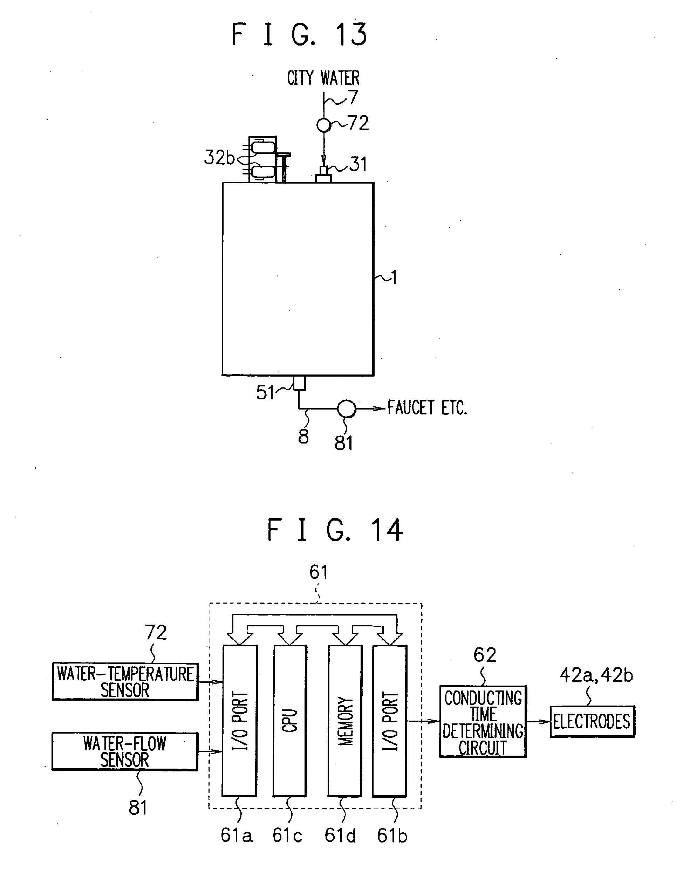

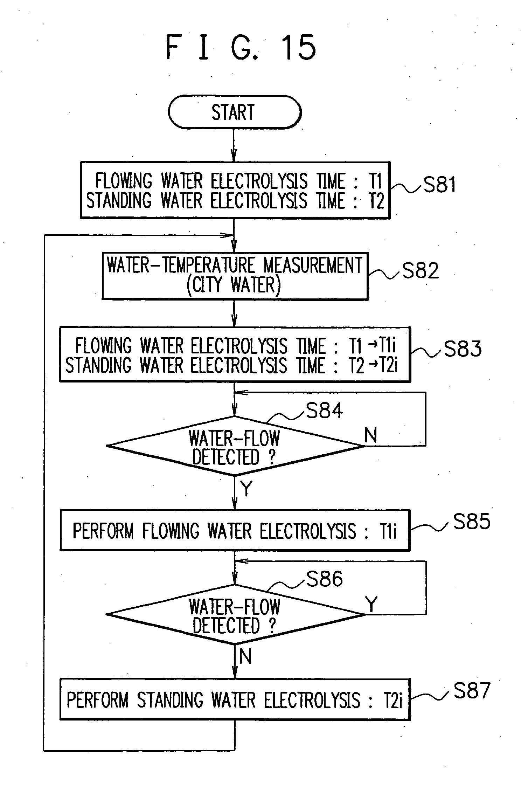

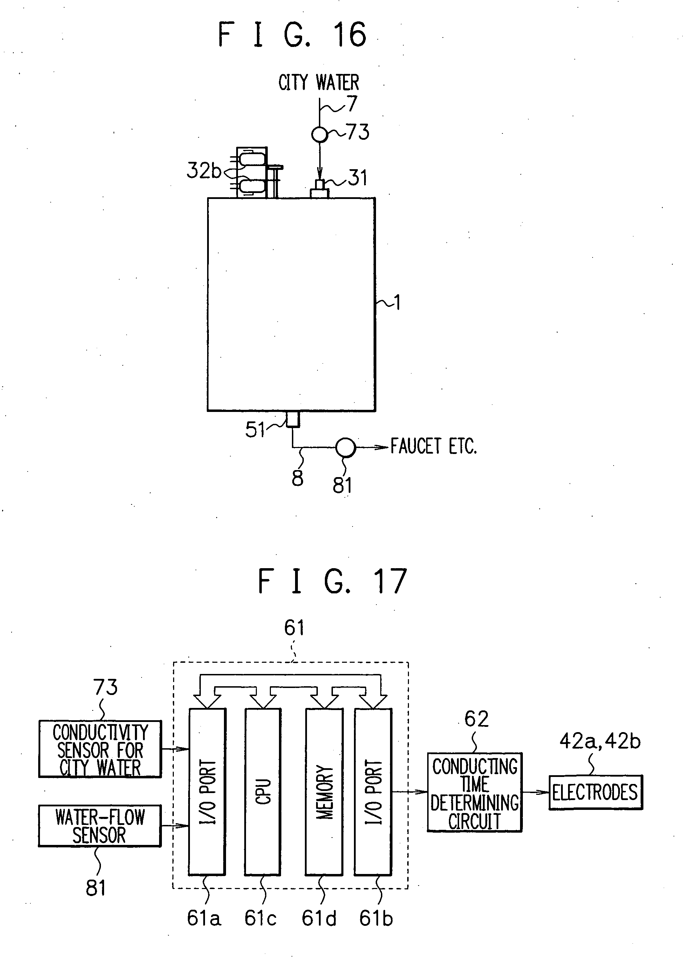

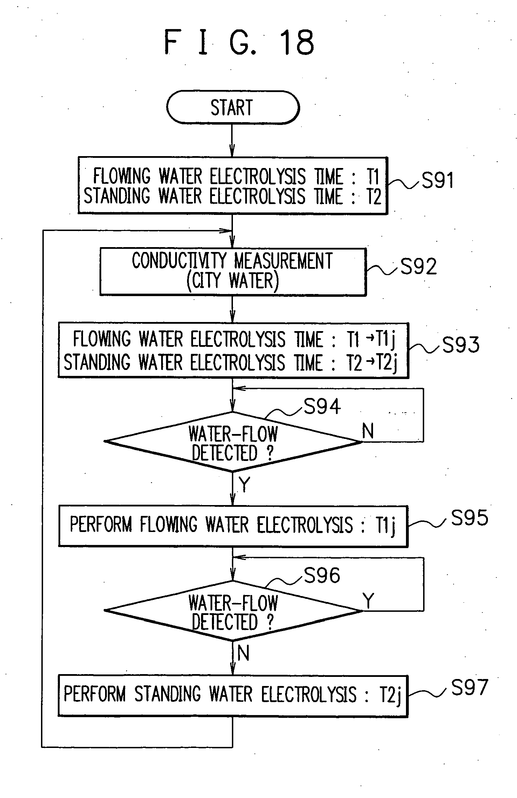

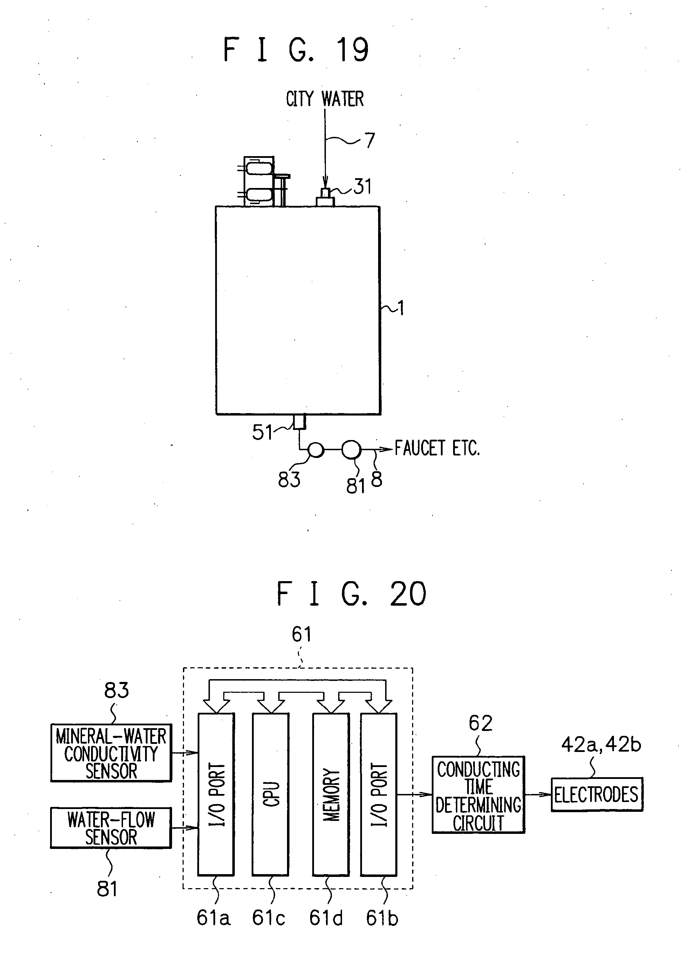

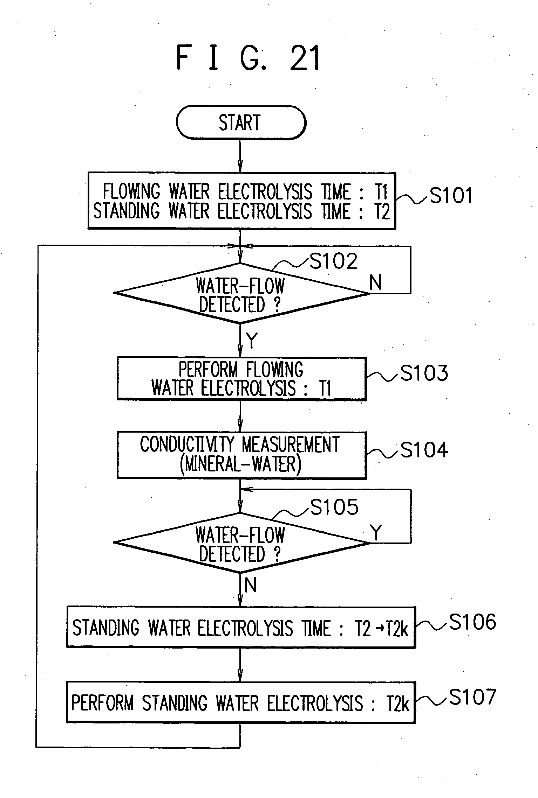

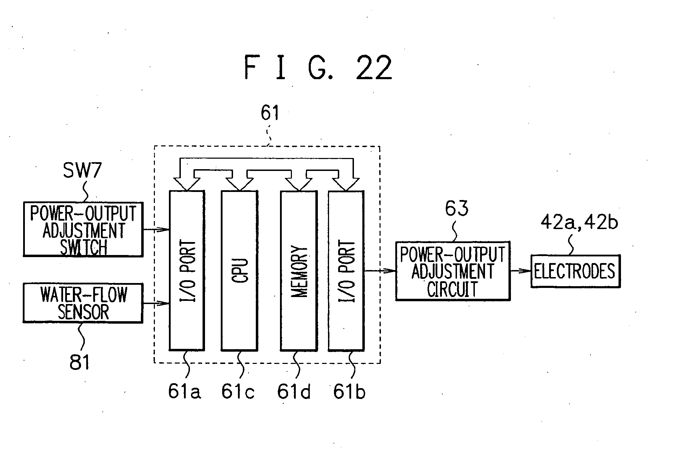

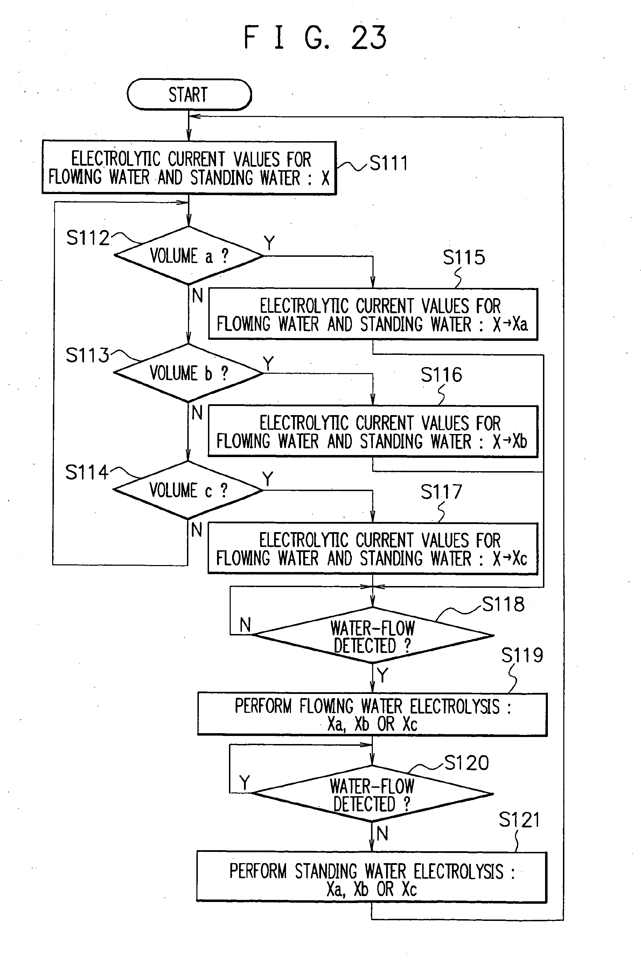

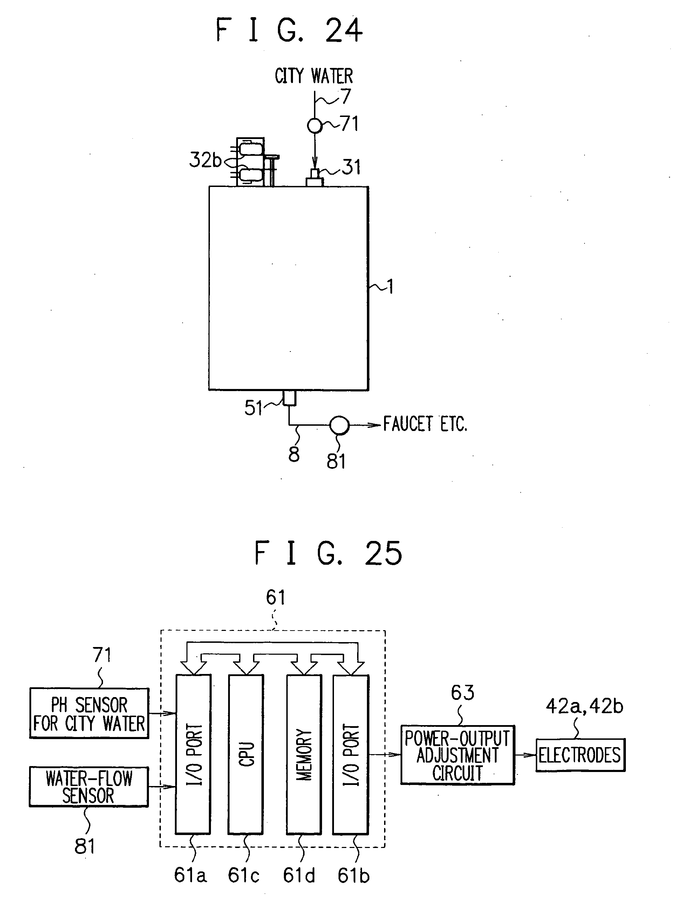

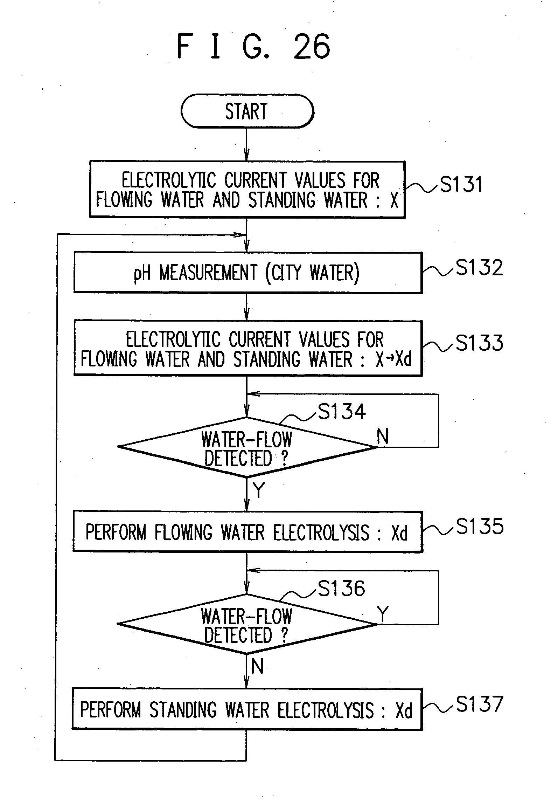

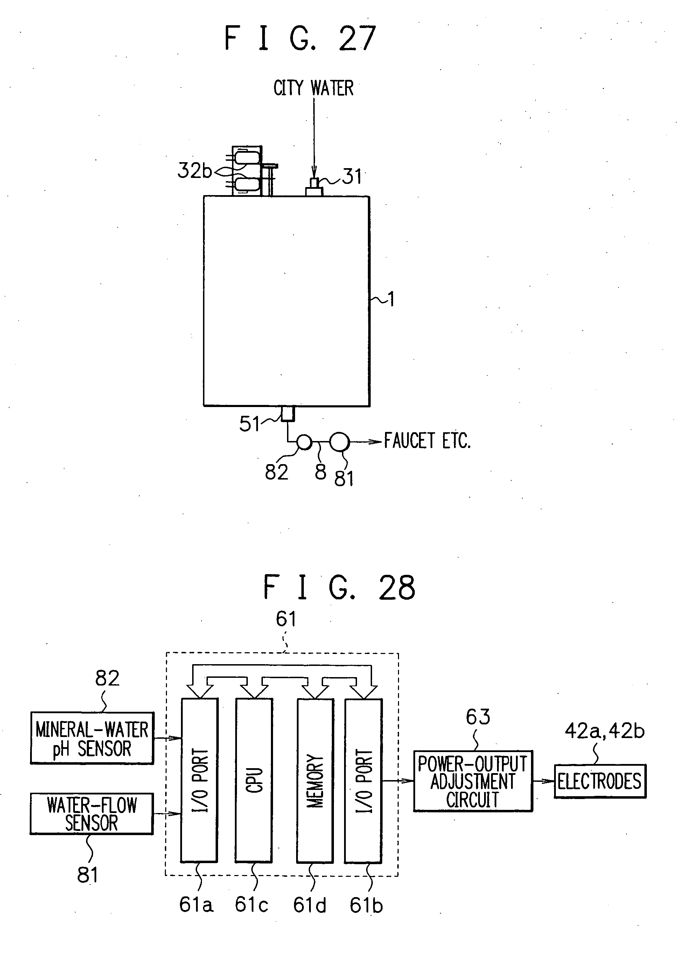

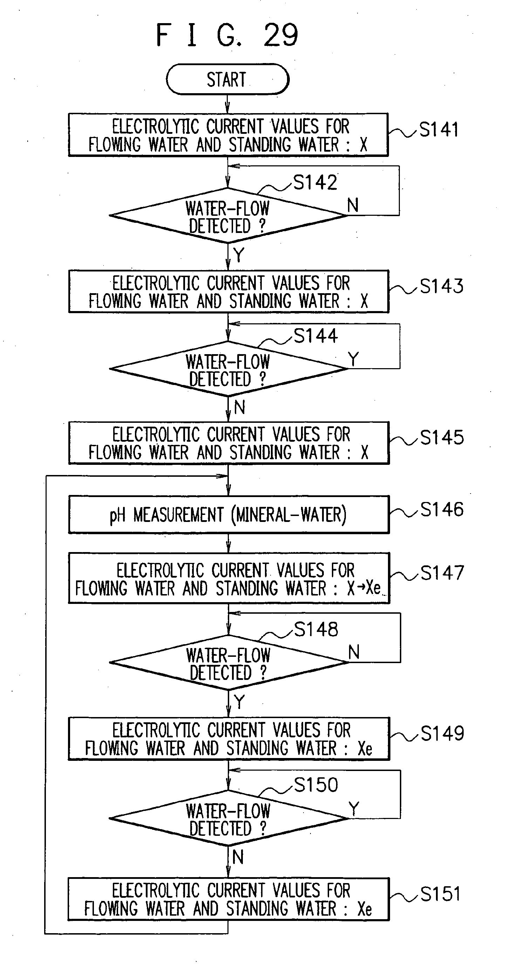

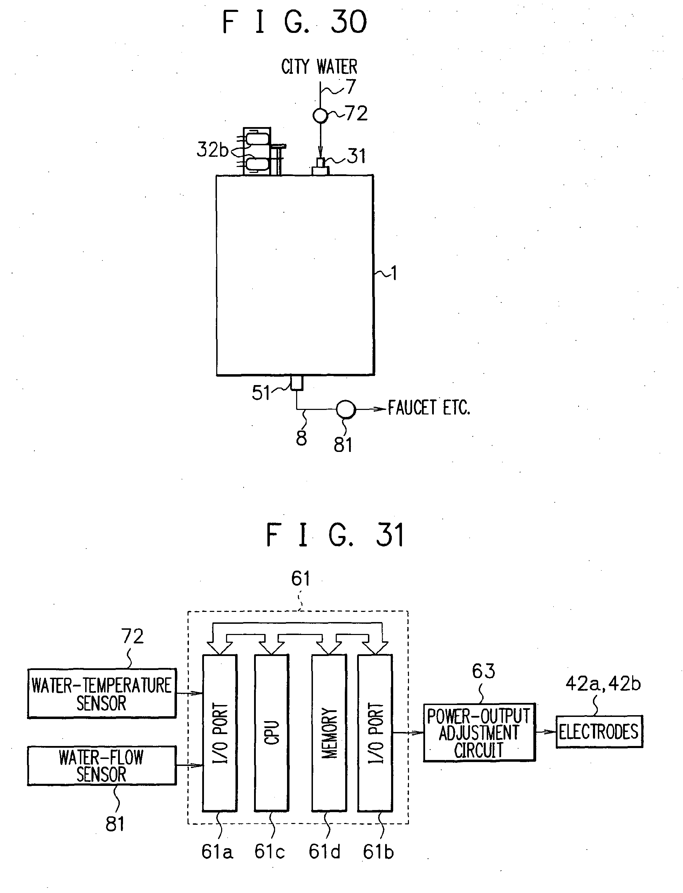

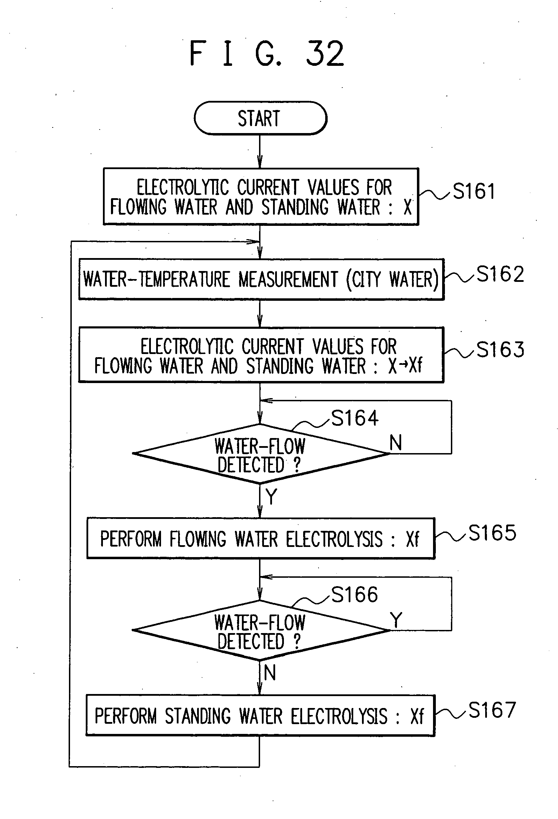

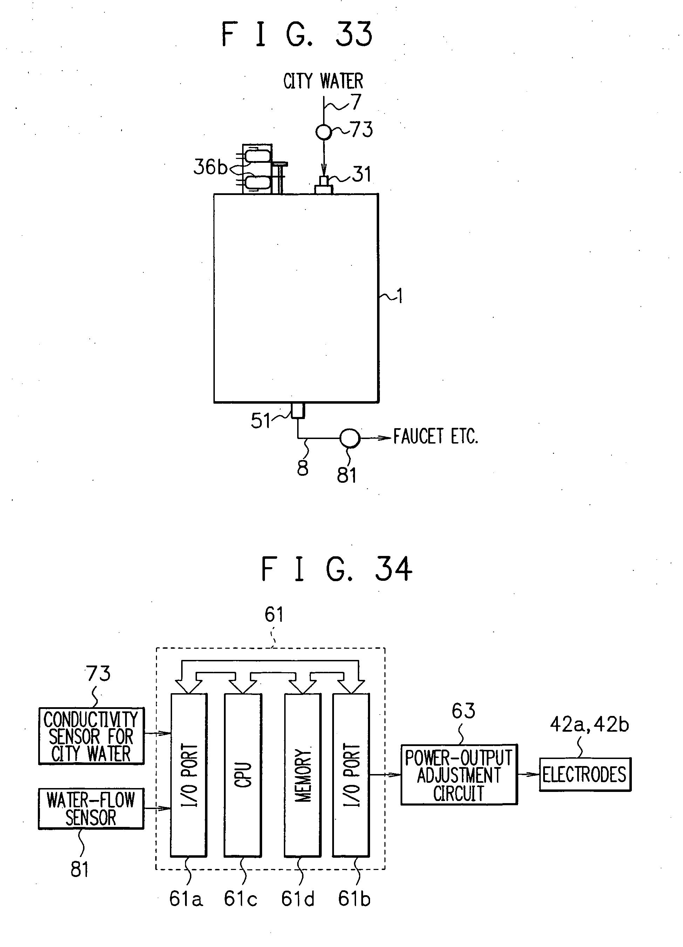

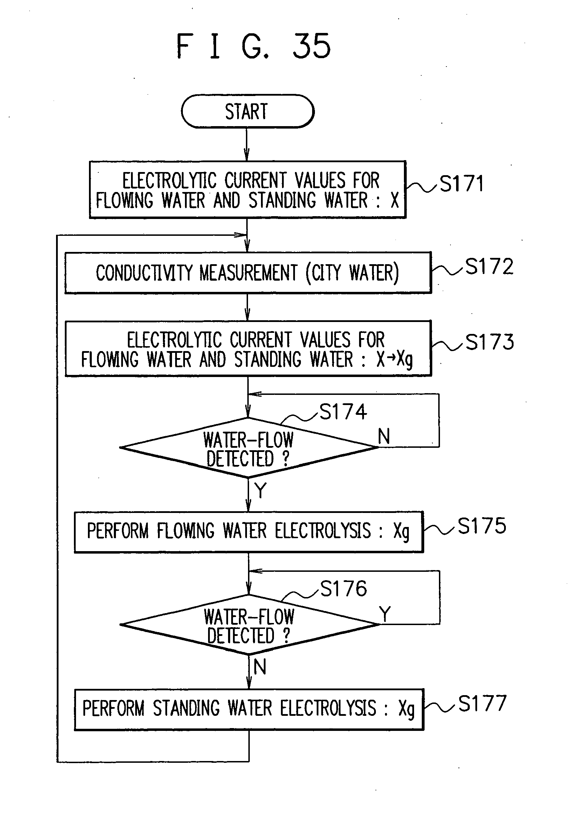

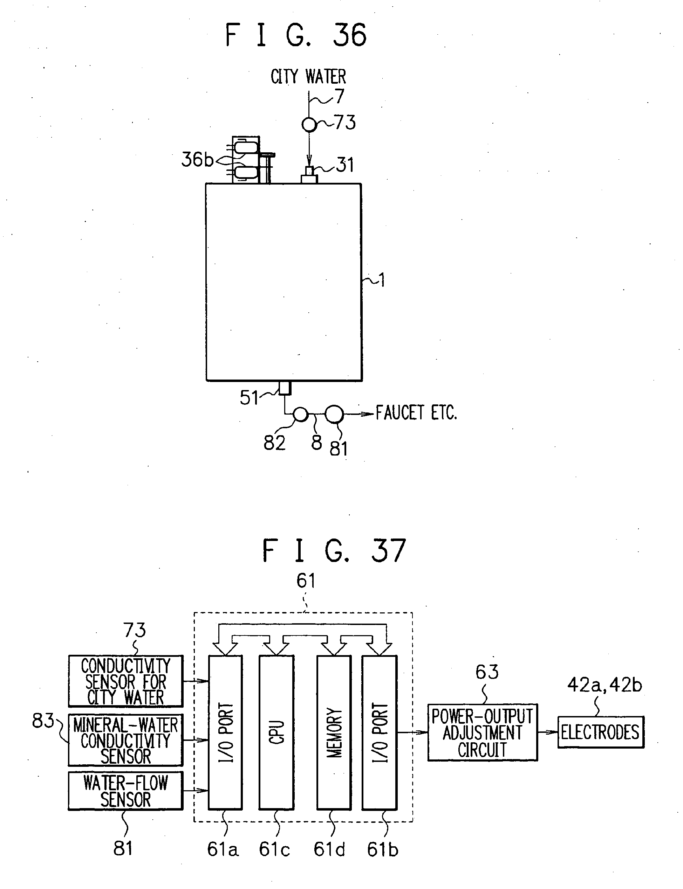

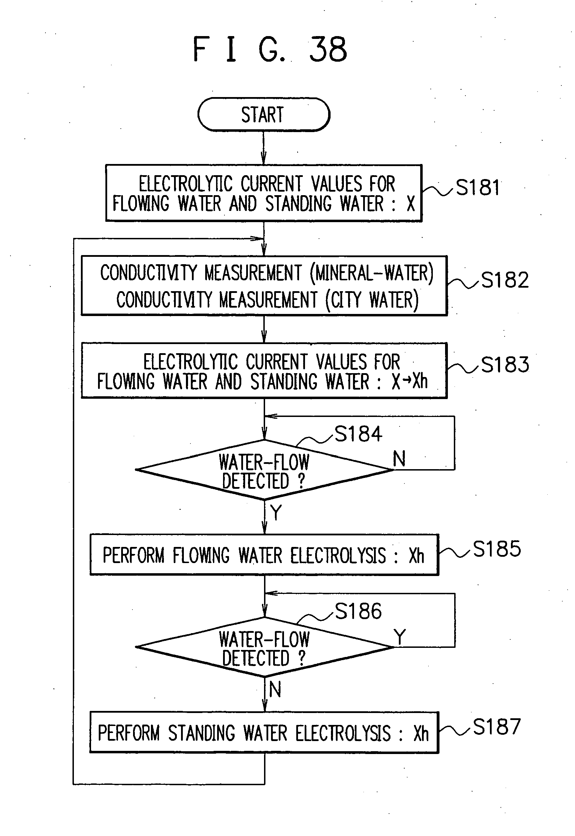

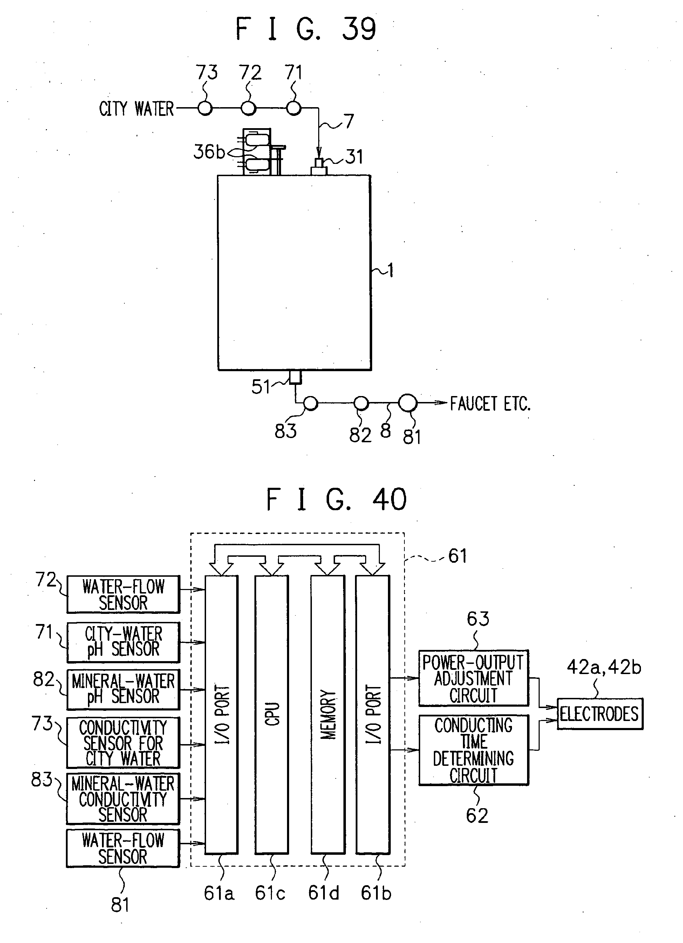

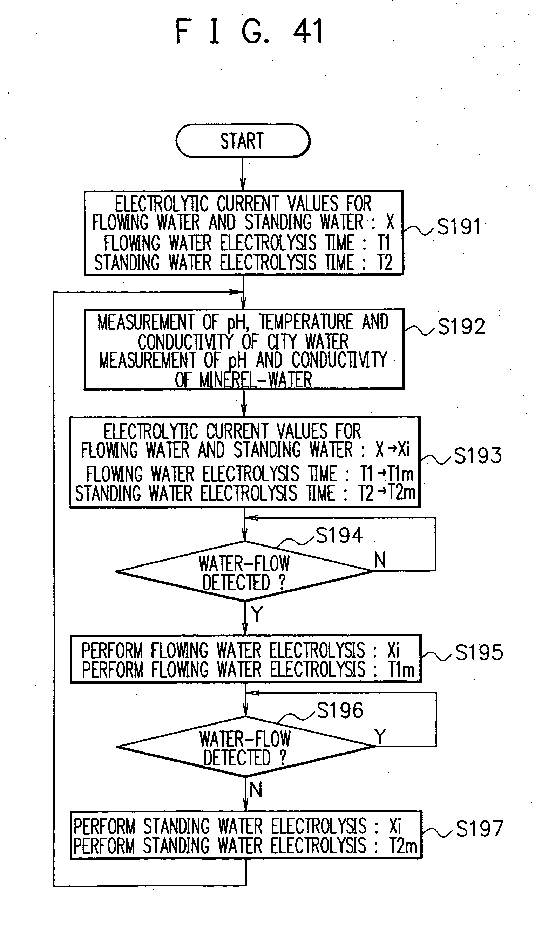

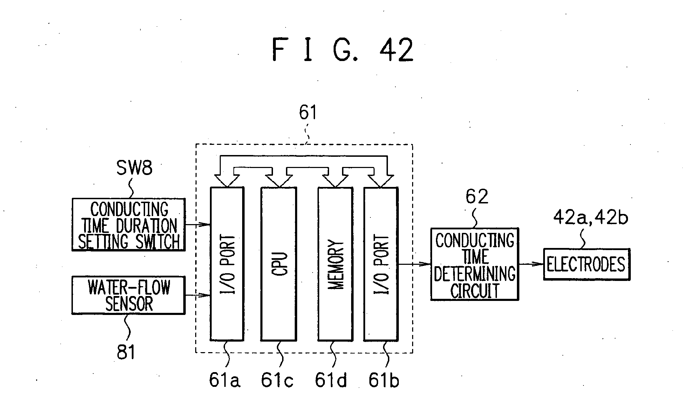

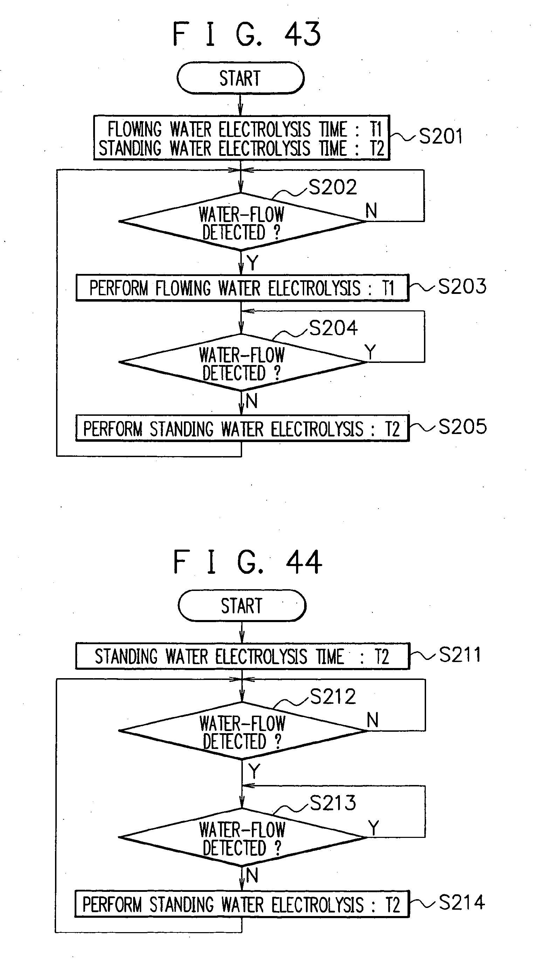

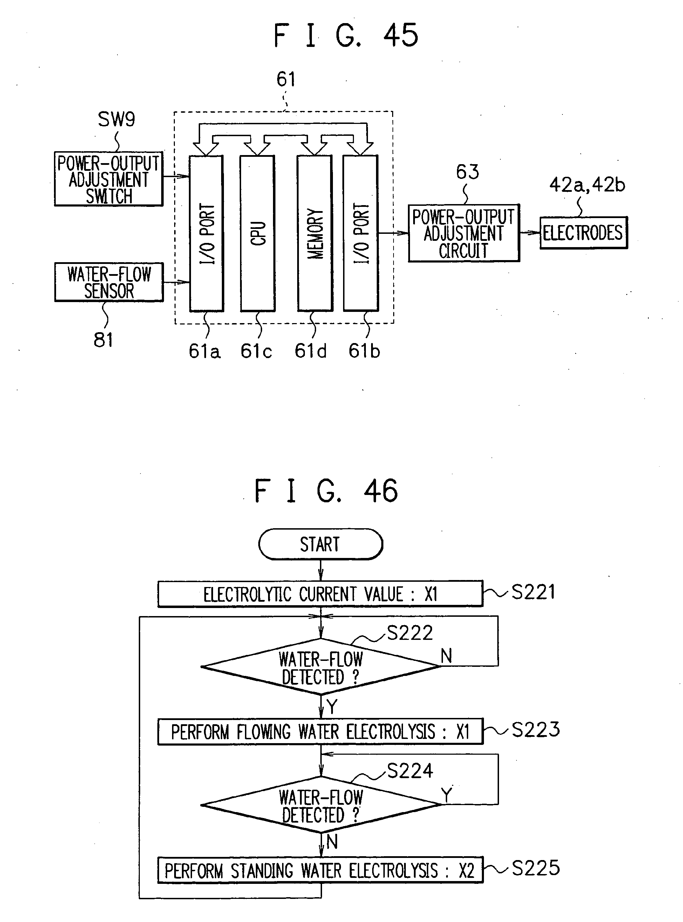

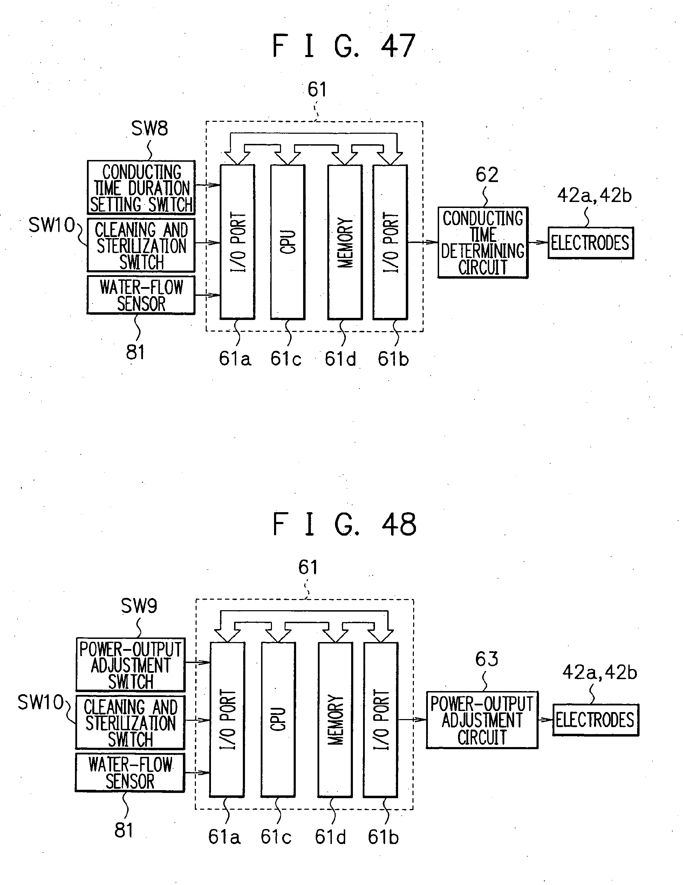

Figure 1 is a sectional front elevation of a mineral-water producing apparatus in accordance with the first embodiment of this invention; Figure 2 is a sectional side elevation of a mineral-water producing apparatus in accordance with the first embodiment of this invention; Figure 3 is a block diagram illustrating the electrode power control circuit of a mineral-water producing apparatus in accordance with the first embodiment of this invention; Figure 4 is a flow chart illustrating the power control of a mineral-water producing apparatus in accordance with the first embodiment of this invention; Figure 5 is a schematic front elevation of a mineral-water producing apparatus in accordance with the second embodiment of this invention; Figure 6 is a block diagram illustrating the electrode power control circuit of a mineral-water producing apparatus in accordance with the second embodiment of this invention; Figure 7 is a flow chart illustrating the power control of a mineral-water producing apparatus in accordance with the second embodiment of this invention; Figure 8 is a schematic front elevation of a mineral-water producing apparatus in accordance with the third embodiment of this invention; Figure 9 is a block diagram illustrating the electrode power control circuit of a mineral-water producing apparatus in accordance with the third embodiment of this invention; Figure 10 is a flow chart illustrating the power control of a mineral-water producing apparatus in accordance with the third embodiment of this invention; Figure 11 is a block diagram illustrating the electrode power control circuit of a mineral-water producing apparatus in accordance with the fourth embodiment of this invention; Figure 12 is a flow chart illustrating the power control of a mineral-water producing apparatus in accordance with the fourth embodiment of this invention; Figure 13 is a schematic front elevation of a mineral-water producing apparatus in accordance with the fifth embodiment of this invention; Figure 14 is a block diagram illustrating the electrode power control circuit of a mineral-water producing apparatus in accordance with the fifth embodiment of this invention; Figure 15 is a flow chart illustrating the power control of a mineral-water producing apparatus in accordance with the fifth embodiment of this invention; Figure 16 is a schematic front elevation of a mineral-water producing apparatus in accordance with the sixth embodiment of this invention; Figure 17 is a block diagram illustrating the electrode power control circuit of a mineral-water producing apparatus in accordance with the sixth embodiment of this invention; Figure 18 is a flow chart illustrating the power control of a mineral-water producing apparatus in accordance with the sixth embodiment of this invention; Figure 19 is a schematic front elevation of a mineral-water producing apparatus in accordance with the seventh embodiment of this invention; Figure 20 is a block diagram illustrating the electrode power control circuit of a mineral-water producing apparatus in accordance with the seventh embodiment of this invention; Figure 21 is a flow chart illustrating the power control of a mineral-water producing apparatus in accordance with the seventh embodiment of this invention; Figure 22 is a block diagram illustrating the electrode power control circuit of a mineral-water producing apparatus in accordance with the eighth embodiment of this invention; Figure 23 is a flow chart illustrating the power control of a mineral-water producing apparatus in accordance with the eighth embodiment of this invention; Figure 24 is a schematic front elevation of a mineral-water producing apparatus in accordance with the ninth embodiment of this invention; Figure 25 is a block diagram illustrating the electrode power control circuit of a mineral-water producing apparatus in accordance with the ninth embodiment of this invention; Figure 26 is a flow chart illustrating the power control of a mineral-water producing apparatus in accordance with the ninth embodiment of this invention; Figure 27 is a schematic front elevation of a mineral-water producing apparatus in accordance with the tenth embodiment of this invention; Figure 28 is a block diagram illustrating the electrode power control circuit of a mineral-water producing apparatus in accordance with the tenth embodiment of this invention; Figure 29 is a flow chart illustrating the power control of a mineral-water producing apparatus in accordance with the tenth embodiment of this invention; Figure 30 is a schematic front elevation of a mineral-water producing apparatus in accordance with the eleventh embodiment of this invention; Figure 31 is a block diagram illustrating the electrode power control circuit of a mineral-water producing apparatus in accordance with the eleventh embodiment of this invention; Figure 32 is a flow chart illustrating the power control of a mineral-water producing apparatus in accordance with the eleventh embodiment of this invention; Figure 33 is a schematic front elevation of a mineral-water producing apparatus in accordance with the twelfth embodiment of this invention; Figure 34 is a block diagram illustrating the electrode power control circuit of a mineral-water producing apparatus in accordance with the twelfth embodiment of this invention; Figure 35 is a flow chart illustrating the power control of a mineral-water producing apparatus in accordance with the twelfth embodiment of this invention; Figure 36 is a schematic front elevation of a mineral-water producing apparatus in accordance with the thirteenth embodiment of this invention; Figure 37 is a block diagram illustrating the electrode power control circuit of a mineral-water producing apparatus in accordance with the thirteenth embodiment of this invention; Figure 38 is a flow chart illustrating the power control of a mineral-water producing apparatus in accordance with the thirteenth embodiment of this invention; Figure 39 is a schematic front elevation of a mineral-water producing apparatus in accordance with the fourteenth embodiment of this invention; Figure 40 is a block diagram illustrating the electrode power control circuit of a mineral-water producing apparatus in accordance with the fourteenth embodiment of this invention; Figure 41 is a flow chart illustrating the power control of a mineral-water producing apparatus in accordance with the fourteenth embodiment of this invention; Figure 42 is a block diagram illustrating the electrode power control circuit of a mineral-water producing apparatus in accordance with the fifteenth embodiment of this invention; Figure 43 is a flow chart illustrating the power control of a mineral-water producing apparatus in accordance with the fifteenth embodiment of this invention; Figure 44 is a flow chart illustrating another example of the power control of a mineral-water producing apparatus in accordance with the fifteenth embodiment of this invention; Figure 45 is a block diagram illustrating the electrode power control circuit of a mineral-water producing apparatus in accordance with the sixteenth embodiment of this invention; Figure 46 is a flow chart illustrating the power control of a mineral-water producing apparatus in accordance with the sixteenth embodiment of this invention; Figure 47 is a block diagram illustrating the electrode power control circuit of a mineral-water producing apparatus in accordance with the seventeenth embodiment of this invention; and Figure 48 is a block diagram illustrating the electrode power control circuit of a mineral-water producing apparatus in accordance with the eighteenth embodiment of this invention.

### Best Mode for Carrying Out the Invention

Figures 1 to 6 show a mineral-water producing apparatus in accordance with the first embodiment of this invention. First, the overall structure of the mineral-water producing apparatus will be described with reference to Figures 1 and 2.

The mineral-water producing apparatus includes a flat box-like bath main body 1, whose inside is partitioned into two: an upper part and a lower part via a partition board 2 through which water can flow. Above the partition board 2 is formed an accumulating bath 3 to which city water is supplied and below the partition board 2 is formed an electrolytic bath 4 which electrolyzes water.

On the top board of the accumulating bath 3 is provided a water lead-in tube 31 through which city water is led into the accumulating bath 3. And a water-level detector 32 is provided in the accumulating bath 3. The up and down movement of the float 32a of the water-level detector 32 is detected by upper and lower micro-switches 32b. The water flow of city water is controlled based on the detection signals from the micro-switches 32b, whereby the water level in the accumulating bath 3 is kept at a predetermined level. In the accumulating bath 3 is also provided a guide board 33, which introduces the city water supplied through the water lead-in tube 31 to the center so that the city water flows throughout the accumulating bath 3. Reference numeral 34 denotes an overflow pipe which discharges water exceeding a tolerable level from the accumulating bath 3.

In the electrolytic bath 4, more than one mineral eluting material 41 (granulated or powdered coral sand, healstone (bakuhanseki), mineral stone, etc.) each packed in a flat case and more than one pair of electrodes: cathode 42a and anode 42b are arranged alternately. A DC voltage is applied across each pair of electrodes 42a and 42b with one mineral eluting material 41 placed between the electrodes, whereby a mineral element(s) is eluted from the mineral eluting materials 41. In more detail, once a DC voltage is applied across each pair of electrodes 42a, 42b, the following reaction occurs on the anode 42a side:

4H₂O → 4H⁺ + 2O₂ + 4e⁻

which increases the hydrogen ion concentration and produces acid water. On the other hand, on the cathode 42b side the following reaction occurs:

4H₂O + 4e⁻ → 2H₂ + 4OH⁻

which produces alkali water. And each mineral eluting material 41 (e.g. calcium carbonate: CaCO₃) reacts with the acid water:

CaCO₃ + 2H⁺ → Ca₂⁺ + H₂O + CO₂

to allow mineral ions (Ca₂⁺) to be eluted from the mineral eluting material.

The terminals 42c of the electrodes 42a, 42b penetrate the partition board 2 and protrude from the top board of the accumulating bath 3, and thus it can be connected to a power supply. Besides the mineral eluting materials 41, an electrolytic auxiliary agent which consists of an electrically conductive material may be mixed in the flat case. As the electrically conductive material, any one can be selected from among powder-like activated carbon, granule-like activated carbon, fiber-like activated carbon, charcoal, carbon black, gold, silver and platinum-based metals and mixtures thereof. Since the electrically conductive materials are carbon-based materials, gold, silver and platinum-based metals, when they are eluted, they are harmless to human bodies. When the electrically conductive material is activated carbon, silver may be made to adhere to the activated carbon to improve the conductivity. Although the mineral eluting materials 41 and the electrically conductive materials are mixed and made solid, the mixture is so constructed that water can flow through the inside thereof.

Even if the mineral eluting materials 41 are insulating materials and the conductivity in the electrolytic bath 4 is low, once an electrolytic auxiliary agent is mixed in the mineral eluting materials, the lowering of the conductivity is prevented due to the electrolytic auxiliary agent, and hence the decrease in mineral eluting efficiency.

Below the electrolytic bath 4 is installed a collection chamber 5 where mineral water produced in the electrolytic bath 4 joins each other. The mineral water having flowed into the collection chambers 5 is led into a terminal, such as a faucet, through a water lead-out tube 51. When installing the mineral-water producing apparatus in a drink dispenser, the mineral water flows into the spout.

Constructing the mineral-water producing apparatus in the above described manner allows city water to flow via the following route:
lead-in pipe 31 → accumulating bath 3 → partition board 2 → electrolytic bath 4 → collection chamber 5 → lead-out pipe 51 → faucet (dispenser)
as shown by the arrows in Figures 1 and 2, to feed mineral water.

Then, an power control circuit of the mineral-water producing apparatus will be described with reference to the block diagram of Figure 3. The mineral-water producing apparatus includes three water-quality selection switches SW1, SW2 and SW3. When selecting any one of the water-quality selection switches SW1, SW2 and SW3, the pH of the city water supplied to the accumulating bath 3 is measured in advance. When the pH of the city water is in the range of 8.0 < pH ≤ 8.5, water-quality selection switch SW1 is manually selected, when the pH of the city water in the range of 7.5 < pH ≤ 8.0, water-quality selection switch SW2 manually selected, and when the pH of the city water in the range of pH < 7.5, water-quality selection switch SW3 manually selected.

The pH of city water may be measured by temporarily operating the mineral-water producing apparatus to lead city water into the bath main body 1 and use the city water having been accumulated in the bath main body 1 or by using city water obtained from a faucet other than the one used for the mineral-water producing apparatus.

The power control circuit also includes a controller 61, which is made up of a microcomputer, as controlling means for controlling electrodes 42a, 42b. This controller 61 includes I/O ports 61a and 61b, a CPU 61c, and a memory 61d. In the memory 61d, flowing water electrolysis time T1 and standing water electrolysis time T2 are stored in advance.

The term "flowing water electrolysis time T1" means the length of time that the electrodes 42a, 42b are powered while feeding mineral water, whereas the term "standing water electrolysis time T2" means the length of time that the electrodes 42a, 42b are powered after stopping feeding mineral water (while feeding no mineral water). The times T1 and T2 are such that they allow the mineral water produced to have a desired mineral concentration when the pH of city water is lower than 7.5, in other words, the degree of the elution of the mineral eluting material 41 is normal, and such times are set based on experience.

The CPU 61c directs, based on the signal from water-quality selection switch SW1, SW2 or SW3, a conducting time determining circuit 62 to perform the following calculations. When the signal from the water-quality selection switch SW1 is input, the flowing water electrolysis time T1 and the standing water electrolysis time T2 are multiplied by a correction factor "0.5" to determine electrolysis time T1a, T2a. When the signal from the water-quality selection switch SW2 is input, the flowing water electrolysis time T1 and the standing water electrolysis time T2 are multiplied by a correction factor "0.7" to determine electrolysis time T1b, T2b. And when the signal from the water-quality selection switch SW3 is input, the flowing water electrolysis time T1 and the standing water electrolysis time T2 are multiplied by a correction factor "1.0" to determine electrolysis time T1c, T2c. Once the conducting time duration is determined in the conducting time determining circuit 62, electrodes 42a, 42b are powered based on the determined time.

The electrode power control circuit described above will be described with reference to the flow chart of Figure 4. First, the pH of city water is manually measured. When the measurements show the pH of the city water is in the range of 8.0 < pH ≤ 8.5, the water-quality selection switch SW1 is selected. When the measurements show the pH of the city water is in the range of 7.5 < pH ≤ 8.0, the water-quality selection switch SW2 is selected. And when the measurements show the pH of the city water is in the range of pH < 7.5, the water-quality selection switch SW3 is selected.

In the mineral-water producing apparatus, a flowing water electrolysis time T1 and a standing water electrolysis time T2, as standards, are set in advance (S1). And which one of the water-quality selection switches SW1, SW2 and SW3 is input is judged (S2, S3, and S4). When the water-quality selection switch SW1 is input, the electrolysis time T1a, T2a is determined by multiplying the electrolysis time T1 for flowing water and the electrolysis time T2 for standing water by a correction factor "0.5" (S5). When the water-quality selection switch SW2 is input, the electrolysis time T1b, T2b is determined by multiplying the electrolysis time T1 for flowing water and the electrolysis time T2 for standing water by a correction factor "0.7" (S6). And when the water-quality selection switch SW3 is input, the electrolysis time T1c, T2c is determined by multiplying the electrolysis time T1 for flowing water and the electrolysis time T2 for standing water by a correction factor "1.0" (S7).

After that, when the faucet is turned on and the mineral water is allowed to flow, or when the valve (not shown in the figure) of the dispenser of a drink dispenser is opened (when there is a drink selling signal), or in cases where a water flow sensor (not shown in the figure) is installed in the downstream of the lead-out pipe 51 and when a water flow is detected (S8) (in this embodiment an example is shown in which electrodes are controlled based on water-flow detection), the electrodes 42a, 42b are powered over the time T1a, T1b or T1c (S9) which is determined by the conducting time determining circuit 62. Then, once the feeding of the mineral water is terminated and no water flow is detected (S10), the electrodes 42a, 42b are powered over the time T2a, T2b or T2c which is determined by the conducting time determining circuit 62. Mineral water is produced by these flowing water electrolysis and standing water electrolysis.

As described above, according to the first embodiment of this invention, when the pH of city water is normal (pH < 7.5), the mineral-water producing apparatus operates normally, but on the other hand, with increase in the pH of city water, the flowing water electrolysis time T1 and the standing water electrolysis time T2 are decreased. Thus, when the pH of city water is high, the amount of minerals eluted from the mineral eluting materials can be decreased, whereby the mineral elements will not precipitate.

Figures 5 to 7 show a mineral-water producing apparatus in accordance with the second embodiment of this invention. The same constituents as those of the first embodiment are denoted with the same reference numerals and the description thereof is omitted.

The mineral-water producing apparatus in accordance with this embodiment includes: a water-supply pipe 7 through which city water is lead into the bath main body 1; and a water-delivery pipe 8 through which mineral water is lead from the bath main body 1 to the dispenser of a drink dispenser, etc., as shown in Figure 5. In the water-supply pipe 7 is installed a pH sensor 71 which detects the pH of city water, whereas in the water-delivery pipe 8 is installed a water-flow sensor 81 which detects whether or not there is a water flow in the water-delivery pipe 8. The detection signals from the sensors 71 and 81 are input into a controller 61 and the power control of electrodes 42a, 42b is performed by the controller 61 and a conducting time determining circuit 62, as shown in Figure 6.

In the memory 61d, flowing water electrolysis time T1 and standing water electrolysis time T2 are stored in advance, just like the above described first embodiment.

In the conducting time determining circuit 62, the following calculations are performed. When the pH of city water is in the range of 8.0 < pH ≤ 8.5, the flowing water electrolysis time T1 and the standing water electrolysis time T2 are multiplied by a correction factor "0.5". When the pH of city water is in the range of 7.5 < pH ≤ 8.0, the electrolysis times T1 and T2 are multiplied by a correction factor "0.7". And when the pH of city water is in the range of pH < 7.5, the electrolysis times T1 and T2 are multiplied by a correction factor "1.0". These calculations performed in the conducting time determining circuit 62 determine electrolysis times T1d, T2d.

The mineral-water producing apparatus is constructed as above and the power control of electrodes 42a, 42b is performed as shown in Figure 7. Specifically, in the mineral-water producing apparatus, a flowing water electrolysis time T1 and a standing water electrolysis time T2, as standards, are set in advance (S31). The pH of the city water in the water-supply pipe 7 is detected by the pH sensor 71 and measured by the controller 61 (S32). Based on the measured pH value, the flowing water electrolysis time T1 and the standing water electrolysis time T2 are multiplied by a proper correct factor, "0.5", "0.7" or "1.0", to determine electrolysis times T1d, T2d (S33). Once the valve of the drink dispenser is opened and the water-flow sensor 81 detects a water flow (S34), the electrodes 42a, 42b are powered over the flowing water electrolysis time T1d which is determined by the conducting time determining circuit 62 (S35). After that, once the valve of the drink dispenser is closed and the mineral-water feed operation is terminated and no water flow is detected (S36), the electrodes 42a, 42b are powered over the standing water electrolysis time T2d which is determined by the conducting time determining circuit 62 (S37). Mineral water is produced by these flowing water electrolysis and standing water electrolysis.

According to the second embodiment of this invention, the pH of city water is measured automatically, and moreover, the flowing water electrolysis time and the standing water electrolysis time are corrected automatically. The operation of keeping mineral water at a predetermined concentration is the same as that of the first embodiment.

Figures 8 to 10 show a mineral-water producing apparatus in accordance with the third embodiment of this invention. The same constituents as those of the second embodiment are denoted with the same reference numerals and the description thereof is omitted.

The mineral-water producing apparatus in accordance with this embodiment includes: a water-flow sensor 81 and a pH sensor 82 for detecting the pH of the mineral water produced both of which are installed in the water-delivery pipe 8, as shown in Figure 8. The detection signals from the sensors 81, 82 are input into the controller 6 and the power control of electrodes 42a, 42b is performed by the controller 61 and the conducting time determining circuit 62, as shown in Figure 9.

In the memory 61d, a flowing water electrolysis time T1 and a standing water electrolysis time T2 are stored in advance, just like the above described second embodiment. And a correction calculation circuit is also stored in the conducting time determining circuit 62, like the above described second embodiment. The flowing water electrolysis time T1 and the standing water electrolysis time T2 are multiplied by a correction factor "0.5", "0.7" or "1.0" to determine electrolysis times T1e, T2e.

The mineral-water producing apparatus is constructed as above and the power control of the electrodes 42a, 42b is performed as shown in Figure 10. Specifically, in the mineral-water producing apparatus, the flowing water electrolysis time T1 and the standing water electrolysis time T2, as standards, are set in advance (S41). Once a water flow is detected (once a drink selling signal is input), the electrolysis is performed over the standard flowing water electrolysis time T1 and standing water electrolysis is also performed, after the water flow is terminated, the standard standing water electrolysis time T2 (S42 to S45). After this mineral-water producing operation is terminated, the pH of the mineral water in the water-delivery pipe 8 is measured, and the flowing water electrolysis time T1 and the standing water electrolysis time T2 are changed to T1e and T2e, respectively, based on the measured pH value (S46, S47). After that, when a drink selling signal is input again, the flowing water electrolysis and the standing water electrolysis are performed based on the changed electrolysis time T1e, T2e, respectively (S48 to S51).

According to the third embodiment of this invention, the flowing water electrolysis time and the standing water electrolysis time are changed based on the pH of the mineral water produced, whereby the concentration of the mineral water is kept at a predetermined value.

Figures 11 and 12 show a mineral-water producing apparatus in accordance with the fourth embodiment of this invention. The same constituents as those of the first embodiment are denoted with the same reference numerals and the description thereof is omitted.

The mineral-water producing apparatus in accordance with this embodiment includes: a water-flow sensor 81 installed in a water-delivery pipe 8, just like the above described second and third embodiments. The apparatus also includes three water-temperature selection switches SW4, SW5, SW6, as shown in Figure 11. Any one of the water-temperature selection switches SW4, SW5 and SW6 is selected manually based on the temperature of city water measured in advance.

When the temperature of city water is very high, the solubility of minerals is decreased (minerals are likely to precipitate), and therefore switch SW4, which sets the conducting time duration of electrodes 42a, 42b to be shorter (correction factor: "0.5"), is selected. When the temperature of city water is a little high, the solubility of minerals is also decreased, and therefore switch SW5, which sets the conducting time duration of electrodes 42a, 42b to be shorter, but not so shorter as SW4 (correction factor: "0.7"), is selected. When the temperature of city water is equal to or less than the normal temperature, switch SW6 is selected and the apparatus is operated at the standard conducting time duration.

As shown in Figure 11, the signals from the water flow sensor 81 and the water-temperature selection switches SW4, SW5 and SW6 are input into the controller 61, and the power control of the electrodes 42a, 42b is performed by the controller 61 and the conducting time determining circuit 62.

In the memory 61d, a flowing water electrolysis time T1 and a standing water electrolysis time T2 are stored in advance, just like the above described second embodiment. And a correction calculation circuit is also stored in the conducting time determining circuit 62, just like the above described second embodiment. The flowing water electrolysis time T1 and the standing water electrolysis time T2 are multiplied by a correction factor "0.5", "0.7" or "1.0" to determine flowing water electrolysis times T1f, T1g and T1h and standing water electrolysis times T2f, T2g and T2h.

The electrode power control circuit of the mineral-water producing apparatus as above will be described with reference to the flow chart of Figure 12. First, the temperature of city water is measured manually in the same manner as in the above described first embodiment. When the measurements show the temperature of the city water is very high, switch SW4 is selected manually; when the temperature a little high, switch SW5 selected manually; and when the temperature normal, switch SW6 selected manually.

In the mineral-water producing apparatus, a flowing water electrolysis time T1 and a standing water electrolysis time T2, as standards, are set in advance (S61). Here, which one of the switches SW4, SW5 and SW6 is input is judged (S62, S63, S64). When the switch SW4 is input, the electrolysis times T1f and T2f are determined by multiplying the flowing water electrolysis time T1 and the standing water electrolysis time T2 by a correction factor "0.5" (S65). When the switch SW5 is input, the electrolysis times T1g and T2g are determined by multiplying the flowing water electrolysis time T1 and the standing water electrolysis time T2 by a correction factor "0.7" (S66). And when the switch SW6 is input, the electrolysis times T1h and T2h are determined by multiplying the flowing water electrolysis time T1 and the standing water electrolysis time T2 by a correction factor "1.0" (S67).

After that, when a water-flow detector 81 detects a water flow (S68), the electrodes 42a, 42b are powered over the time T1f, T1g or T1h which is determined by the conducting time determining circuit 62 (S69). Then, once the operation of feeding mineral water is terminated and no water flow is detected (S70), the electrodes 42a, 42b are powered over the time T2f, T2g or T2h which is determined by the conducting time determining circuit 62 (S71). Mineral water is produced by the flowing water electrolysis and the standing water electrolysis.

As described above, according to the fourth embodiment of this invention, when the temperature of city water is normal, the mineral-water producing apparatus operates normally, but on the other hand, with the increase in temperature of city water, the flowing water electrolysis time T1 and the standing water electrolysis time T2 are decreased. Thus, when the temperature of city water is high, the amount of minerals eluted from the mineral eluting materials can be decreased, whereby the mineral elements will not precipitate.

Figures 13 to 15 show a mineral-water producing apparatus in accordance with the fifth embodiment of this invention. The same constituents as those of the first embodiment are denoted with the same reference numerals and the description thereof is omitted.

The mineral-water producing apparatus in accordance with this embodiment includes: a water-temperature sensor 72 which detects the temperature of city water; and a water-flow sensor 81 which detects the water flow in the water-delivery pipe 8, as shown in Figure 13. And as shown in Figure 14, the detection signals from the sensors 72, 81 are input into a controller 61 and the power control of the electrodes 42a, 42b is performed by the controller 61 and the conducting time determining circuit 62.

In the memory 61d, a flowing water electrolysis time T1 and a standing water electrolysis time T2 are stored in advance. And the conducting time determining circuit 62 is so designed that when the temperature of city water is very high, the flowing water electrolysis time T1 and the standing water electrolysis time T2 are multiplied by a correction factor "0.5"; when the temperature is a little high, the flowing water electrolysis time T1 and the standing water electrolysis time T2 are multiplied by a correction factor "0.7"; and when the temperature is normal, the flowing water electrolysis time T1 and the standing water electrolysis time T2 are multiplied by a correction factor "1.0" to determine electrolysis time T1i and T2i.

The mineral-water producing apparatus is constructed as above and the power control of the electrodes 42a, 42b is performed as shown in Figure 15. Specifically, in the mineral-water producing apparatus, a flowing water electrolysis time T1 and a standing water electrolysis time T2, as standards, are set in advance (S81). And the temperature of the city water in the water-supply pipe 7 is detected by the water-temperature sensor 72 and measured by a controller 61 (S82). The flowing water electrolysis time T1 and the standing water electrolysis time T2 are multiplied by a correction factor "0.5", "0. 7" or "1.0" based on the water temperature measured as above to determine electrolysis times T1i and T2i (S83). And once the valve of a drink dispenser is opened and the water-flow sensor 81 detects a water flow (S84), the electrodes 42a, 42b are powered over the flowing water electrolysis time T1i which is determined by the conducting time determining circuit 62 (S85). After that, once the valve is closed to terminate the feed of mineral water and no water flow is detected (S86), the electrodes 42a, 42b are powered over the standing water electrolysis time T2i which is determined by the conducting time determining circuit 62 (S87).

According to the fifth embodiment of this invention, the temperature of city water is measured automatically, and moreover, the flowing water electrolysis time and the standing water electrolysis time are corrected automatically. The operation of keeping mineral water at a predetermined concentration is the same as that of the forth embodiment.

Figures 16 to 18 show a mineral-water producing apparatus in accordance with the sixth embodiment of this invention. The same constituents as those of the first embodiment are denoted with the same reference numerals and the description thereof is omitted.

The mineral-water producing apparatus according to this embodiment includes: a conductivity sensor 73 which detects the electrical conductivity of city water; and a water-flow sensor 81 which detects the water flow in the water-delivery pipe 8, as shown in Figure 16. And as shown in Figure 17, the detection signals from the sensors 73, 81 are input into a controller 61 and the power control of the electrodes 42a, 42b is performed by the controller 61 and the conducting time determining circuit 62.

In the memory 61d, a flowing water electrolysis time T1 and a standing water electrolysis time T2 are stored in advance. And the conducting time determining circuit 62 is so designed that when the conductivity of city water is very high, the flowing water electrolysis time T1 and the standing water electrolysis time T2 are multiplied by a correction factor "0.5"; when the conductivity a little high, the flowing water electrolysis time T1 and the standing water electrolysis time T2 multiplied by a correction factor "0.7"; and when the conductivity is normal, the flowing water electrolysis time T1 and the standing water electrolysis time T2 multiplied by a correction factor "1.0" to determine electrolysis time T1j and T2j.

The mineral-water producing apparatus is constructed as above and the power control of the electrodes 42a, 42b is performed as shown in Figure 18. Specifically, in the mineral-water producing apparatus, the flowing water electrolysis time T1 and the standing water electrolysis time T2, as standards, are set in advance (S91). And the conductivity of the city water in the water-supply pipe 7 is detected by the conductivity sensor 73 and measured by the controller 61 (S92). The flowing water electrolysis time T1 and the standing water electrolysis time T2 are multiplied properly by a correction factor "0.5", "0.7" or "1.0" based on the measured conductivity to determine electrolysis times T1j, T2j (S93). And, once the valve of a drink dispenser is opened and the water flow sensor 81 detects a water flow (S94), the electrodes 42a, 42b are powered over the flowing water electrolysis time T1j which is determined by the conducting time determining circuit 62 (S95). After that, once the valve is closed to terminate the supply of mineral water and no water flow is detected (S96), the electrodes 42a, 42b are powered over the standing water electrolysis time T2j which is determined by the conducting time determining circuit 62 (S97).

According to the sixth embodiment of this invention, the electrical conductivity of city water is measured automatically, and moreover, the flowing water electrolysis time and the standing water electrolysis time are corrected automatically depending on the conductivity, whereby mineral water can be kept at a predetermined concentration.

Figures 19 to 21 show a mineral-water producing apparatus in accordance with the seventh embodiment of this invention. The same constituents as those of the first embodiment are denoted with the same reference numerals and the description thereof is omitted. In the above described sixth embodiment, the electrical conductivity of city water is detected and the electrolysis conducting time duration is controlled based on the conductivity, but on the other hand, in the seventh embodiment, the standing water electrolysis time is controlled based on the conductivity of mineral water.

The mineral-water producing apparatus according to this embodiment includes a water-flow sensor 81 and a conductivity sensor 83 for detecting the conductivity of the mineral water in the water-delivery pipe 8 both of which are installed in the water-delivery pipe 8, as shown in Figure 19. And as shown in Figure 20, the detection signals from the sensors 81, 83 are input into the controller 61 and the power control of the electrodes 42a, 42b is performed by the controller 61 and the conducting time determining circuit 62.

In the memory 61d, flowing water electrolysis time T1 and standing water electrolysis time T2 are stored in advance. And a correction calculation circuit is stored in the conducting time determining circuit 62 so that when the conductivity of mineral water is very high, the standing water electrolysis time T2 is corrected to T2k and shortened based on the detection signal from the conductivity sensor 83.

The mineral-water producing apparatus is constructed as above and power control of the electrodes 42a, 42b is performed as shown in Figure 21. Specifically, in the mineral-water producing apparatus, a flowing water electrolysis time T1 and a standing water electrolysis time T2, as standards, are set in advance (S101). And once a water flow is detected, electrolysis is performed over the standard flowing water electrolysis time T1 and the conductivity of the mineral water flowing through the water-delivery pipe 8 is measured (S102 to S104). Once the operation of producing mineral water is terminated, the standing water electrolysis time T2 is changed to T2k, and the electrodes 42a, 42b are powered over the standing water electrolysis time T2k (S105 to S107).

According to the seventh embodiment of this invention, the water-stop electrolysis time is changed based on the conductivity of mineral water, whereby the concentration of the mineral water is kept at a predetermined value.

Figures 22 and 23 show a mineral-water producing apparatus in accordance with the eighth embodiment of this invention. The same constituents as those of the first embodiment are denoted with the same reference numerals and the description thereof is omitted. In the above described first to seventh embodiments, the flowing water electrolysis time and the standing water electrolysis time are changed properly based on the pH, the water temperature or the electrical conductivity of city water or mineral water, but on the other hand, in the eighth embodiment, the electrolysis control is performed by properly changing electrolytic current values for flowing water and standing water (power output).

The mineral-water producing apparatus according to this embodiment includes a water-flow sensor 81 installed in the water-delivery pipe. And as shown in Figure 22, the apparatus further includes a power-output adjustment switch SW7 which is so designed that volume a, b or c thereof can be selected manually.

When the pH of city water is very high (8.0 < pH ≤ 8.5), the volume a (correction factor: "0.5") is selected which sets electrolytic current values for flowing water and standing water of the electrodes 42a, 42b to be low. When the pH is a little high (7.5 < pH ≤ 8.0), since the solubility of minerals is also decreased, the volume b (correction factor: "0.7") is selected which sets electrolytic current values for flowing water and standing water of the electrodes 42a, 42b to be low, but not so low as when the volume a is selected. When the pH is equal to or lower than the normal pH (pH < 7.5), the volume c is selected to operate electrolysis at a standard electrolytic current value.

As shown in Figure 22, the signals from the water-flow sensor 81 and power-output adjustment switch SW7 are input into a controller 61, and the electrolysis control of the electrodes 42a, 42b is performed by the controller 61 and the power-output adjustment circuit 63.

In the memory 61d, a water-flow and water stop electrolytic current value X, as a standard, is stored in advance. And a correction calculation circuit is stored in the power-output adjustment circuit 63 so that the electrolytic current values for flowing water and standing water X is multiplied by a correction factor "0.5", "0.7" or "1.0" to determine an electrolytic current values for flowing water and standing water Xa, Xb or Xc.

The electrode power control circuit as above will be described with reference to the flow chart of Figure 23. First, the pH of city water is measured. And any one of the volumes a, b and c is selected manually based on the measurements.

In the mineral-water producing apparatus, an electrolytic current values for flowing water and standing water X, as a standard, is set (S111). And which one of the volumes a, b and c is input is judged (S112, S113, S114). When the volume a is input, the standard electrolytic current values for flowing water and standing water X is multiplied by "0.5" to determine the electrolytic current value Xa (S115). When the volume b is input, the standard electrolytic current values for flowing water and standing water X is multiplied by "0.7" to determine the electrolytic current value Xb (S116). When the volume c is input, the standard electrolytic current values for flowing water and standing water X is multiplied by "1.0" to determine the electrolytic current value Xc (S117).

After that, once the water-flow sensor 81 detects a water flow (S118), the flowing water electrolysis is performed based on the electrolytic current value Xa, Xb or Xc which is determined by the power-output adjustment circuit 63 (S119). And once the feed of the mineral water is terminated and no water flow is detected (S120), standing water electrolysis is performed based on the electrolytic current value Xa, Xb or Xc (S121). The mineral concentration of the mineral water is performed by these flowing water electrolysis and standing water electrolysis.

According to the eighth embodiment of this invention, when the pH of city water is normal, the mineral-water producing apparatus is operated normally. And with the increase in the pH of city water, the electrolytic current value X for flowing water and standing water is decreased. Thus, even when the pH of city water is high, the amount of minerals eluted can be decreased, whereby mineral elements will not precipitate.

Figures 24 to 26 show a mineral-water producing apparatus in accordance with the ninth embodiment of this invention. The same constituents as those of the first embodiment are denoted with the same reference numerals and the description thereof is omitted.

The mineral-water producing apparatus in accordance with this embodiment includes: a pH sensor 71 for detecting the pH of city water and a water-flow sensor 81 which detects a water flow in the water-delivery pipe 8, as shown in Figure 24. The detection signals from the sensors 71, 81 are input into a controller 61 and the power control of electrodes 42a, 42b is performed by the controller 61 and the power-output adjustment circuit 63, as shown in Figure 25.

In the memory 61d, an electrolytic current values for flowing water and standing water X is stored in advance, just like the above described eighth embodiment.

A correction calculation circuit is also stored in the power-output adjustment circuit 63 and performs the following calculations. When the pH of city water is in the range of 8.0 < pH ≤ 8.5, the electrolytic current values for flowing water and standing water X is multiplied by a correction factor "0.5". When the pH of city water in the range of 7.5 < pH ≤ 8.0, the electrolytic current values for flowing water and standing water X multiplied by a correction factor "0.7". And when the pH of city water in the range of pH < 7.5, the electrolytic current values for flowing water and standing water X multiplied by a correction factor "1.0". A electrolytic current values for flowing water and standing water Xd is determined by such calculations by the power-output adjustment circuit 63.

The mineral-water producing apparatus is constructed as above and the power control of the electrodes 42a, 42b is performed as shown in Figure 26. Specifically, in the mineral-water producing apparatus, an electrolytic current values for flowing water and standing water X, as a standard, is set (S131). The pH of the city water in the water-supply pipe 7 is detected by the pH sensor 71 and measured by the controller 61 (S132). Based on the measured pH, the electrolytic current values for flowing water and standing water X is multiplied properly by a correction factor "0.5", "0.7" or "1.0" to determine an electrolytic current values for flowing water and standing water Xd (S133). Once the valve of a drink dispenser is opened and the water-flow sensor 81 detects a water flow (S134), flowing water electrolysis is performed based on the electrolytic current values for flowing water and standing water Xd which is determined by the power-output adjustment circuit 63 (S135). After that, once the valve is closed and the feed of mineral water is terminated and no water flow is detected (S136), stop-water electrolysis is performed based on the electrolytic current values for flowing water and standing water Xd (S137). Mineral water is produced by such flowing water electrolysis and standing water electrolysis.

According to the ninth embodiment of this invention, the pH of city water is measured automatically, and moreover, the electrolytic current value is corrected automatically, whereby the concentration of the mineral water produced is kept at a predetermined value.

Figures 27 to 29 show a mineral-water producing apparatus in accordance with the tenth embodiment of this invention. The same constituents as those of the first embodiment are denoted with the same reference numerals and the description thereof is omitted.

The mineral-water producing apparatus in accordance with this embodiment includes: a water-flow sensor 81 and a pH sensor 82 for detecting the pH of mineral water both of which are installed in the water-delivery pipe 8, as shown in Figure 27. The detection signals from the sensors 81, 82 are input into the controller 61 and the power control of electrodes 42a, 42b is performed by the controller 61 and the power-output adjustment circuit 63, as shown in Figure 28.

In the memory 61d, the standard electrolytic current value X for flowing water and standing water is stored in advance, just like the above described ninth embodiment. And a correction calculation circuit is stored in the power-output adjustment circuit 63 so that when the pH of mineral water is high, it corrects the electrolytic current value to be low, based on the detection signal from the pH sensor 82, to determine a electrolytic current value Xe for flowing water and standing water.

The mineral-water producing apparatus is constructed as above and the power control of the electrodes 42a, 42b is performed as shown in Figure 29. Specifically, in the mineral-water producing apparatus, an electrolytic current values for flowing water and standing water X, as a standard, is set (S141). When a water flow is detected (when a drink selling signal is input), flowing water electrolysis is performed at the standard electrolytic current values for flowing water and standing water X and standing water electrolysis is also performed, after the water flow is terminated, at the standard electrolytic current values for flowing water and standing water X (S142 to S145). After the operation of producing mineral water is terminated, the pH of the mineral water in the water-delivery pipe 8 is measured, and based on the measured pH the electrolytic current values for flowing water and standing water X is changed to Xe (S146, S147). After that, if the drink selling signal is input again, flowing water electrolysis and standing water electrolysis are performed based on the changed electrolytic current value Xe (S148 to S151).

According to the tenth embodiment of this invention, the electrolytic current values for flowing water and standing water is changed based on the pH of the mineral water produced, whereby the concentration of the mineral water is kept at a predetermined value.

Figures 30 to 32 show a mineral-water producing apparatus in accordance with the eleventh embodiment of this invention. The same constituents as those of the first embodiment are denoted with the same reference numerals and the description thereof is omitted.

The mineral-water producing apparatus in accordance with this embodiment includes: a water-temperature sensor 72 installed in the water-supply pipe 7; and a water-flow sensor 81 installed in the water-delivery pipe 8, as shown in Figure 30. And as shown in Figure 31, the detection signals from the sensors 72, 81 are input into a controller 61, and the power control of the electrodes 42a, 42b is performed by the controller 61 and the power-output adjustment circuit 63.

In the memory 61d, a standard electrolytic current values for flowing water and standing water X is stored in advance, just like the above described tenth embodiment. And a correction calculation circuit is stored in the power-output adjustment circuit 63 so that when the temperature of city water is very high, the electrolytic current values for flowing water and standing water X is multiplied by a correction factor "0.5", when the temperature of city water is a little high, the electrolytic current values for flowing water and standing water X is multiplied by a correction factor "0.7", and when the temperature of city water is normal, the electrolytic current values for flowing water and standing water X is multiplied by a correction factor "1.0", whereby an electrolytic current values for flowing water and standing water Xf is determined.

The mineral-water producing apparatus is constructed as above and the power control of the electrodes 42a, 42b is performed as shown in Figure 32. Specifically, in the mineral-water producing apparatus, an electrolytic current values for flowing water and standing water X, as a standard, is set (S161). The temperature of the city water in the water-supply pipe 7 is detected by the water-temperature sensor 72 and measured by the controller 61 (S162). The electrolytic current values for flowing water and standing water X is multiplied properly by a correction factor "0.5", "0.7" or "1.0" based on the measured water temperature to determine an electrolytic current values for flowing water and standing water Xf (S163). Once the valve of a drink dispenser is opened and the water-flow sensor 81 detects a water flow (S164), flowing water electrolysis is performed based on the electrolytic current values for flowing water and standing water Xf which is determined by the power-output adjustment circuit 63 (S165). After that, once the valve is closed and the feed of mineral water is terminated and no water flow is detected (S166), stop-water electrolysis is performed based on the electrolytic current values for flowing water and standing water Xf (S167). Mineral water is produced by such flowing water electrolysis and standing water electrolysis.

According to the eleventh embodiment of this invention, the temperature of city water is measured automatically, and moreover, the electrolytic current value is corrected automatically, whereby the concentration of the mineral water produced is kept at a predetermined value.

Figures 33 to 35 show a mineral-water producing apparatus in accordance with the twelfth embodiment of this invention. The same constituents as those of the first embodiment are denoted with the same reference numerals and the description thereof is omitted.

The mineral-water producing apparatus according to this embodiment includes: a conductivity sensor 73 which detects the electrical conductivity of city water; and a water-flow sensor 81 installed in the water-delivery pipe 8, as shown in Figure 33. And as shown in Figure 34, the detection signals from the sensors 73, 81 are input into the controller 61, and the power control of the electrodes 42a, 42b is performed by the controller 61 and the power-output adjustment circuit 63.

In the memory 61d, a standard electrolytic current values for flowing water and standing water X is stored in advance, just like the above described eleventh embodiment. And a correction calculation circuit is stored in the power-output adjustment circuit 63 so that when the electrical conductivity of city water is very high, the electrolytic current values for flowing water and standing water X is multiplied by a correction factor "0.5", when the conductivity of city water is a little high, the electrolytic current values for flowing water and standing water X is multiplied by a correction factor "0.7", and when the conductivity of city water is normal, the electrolytic current values for flowing water and standing water X is multiplied by a correction factor "1.0", whereby an electrolytic current values for flowing water and standing water Xg is determined.

The mineral-water producing apparatus is constructed as above and the power control of the electrodes 42a, 42b is performed as shown in Figure 35. Specifically, in the mineral-water producing apparatus, an electrolytic current values for flowing water and standing water X, as a standard, is set (S171). The electrical conductivity of the city water in the water-supply pipe 7 is detected by the conductivity sensor 73 and measured by the controller 61 (S172). The electrolytic current values for flowing water and standing water X is multiplied properly by a correction factor "0.5", "0.7" or "1.0" based on the measured conductivity to determine an electrolytic current values for flowing water and standing water Xg (S173) . Once the valve of a drink dispenser is opened and the water-flow sensor 81 detects a water flow (S174), flowing water electrolysis is performed based on the electrolytic current values for flowing water and standing water Xg which is determined by the power-output adjustment circuit 63 (S175). After that, once the valve is closed and the feed of mineral water is terminated and no water flow is detected (S176), stop-water electrolysis is performed based on the electrolytic current values for flowing water and standing water Xg (S177). Mineral water is produced by such flowing water electrolysis and standing water electrolysis.

According to the twelfth embodiment of this invention, the conductivity of city water is measured automatically, and moreover, the electrolytic current value is corrected automatically, whereby the concentration of the mineral water produced is kept at a predetermined value.

Figures 36 to 38 show a mineral-water producing apparatus in accordance with the thirteenth embodiment of this invention. The same constituents as those of the first embodiment are denoted with the same reference numerals and the description thereof is omitted.

The mineral-water producing apparatus according to this embodiment includes: a conductivity sensor 73 installed in the water-supply pipe 7; and a conductivity sensor 83 and a water-flow sensor 81 both installed in the water-delivery pipe 8, as shown in Figure 36. And as shown in Figure 37, the detection signals from the sensors 73, 81 and 83 are input into the controller 61, and the power control of the electrodes 42a, 42b is performed by the controller 61 and the power-output adjustment circuit 63.

In the memory 61d, a standard electrolytic current values for flowing water and standing water X is stored in advance, just like the above described twelfth embodiment. And a correction calculation circuit is stored in the power-output adjustment circuit 63 so that it corrects the electrolytic current values for flowing water and standing water X to obtain a predetermined mineral concentration while judging the solubility of mineral water from the conductivities of the city water and the mineral water (electrolytic current values for flowing water and standing water X → Xh).

The mineral-water producing apparatus is constructed as above and the power control of the electrodes 42a, 42b is performed as shown in Figure 38. Specifically, in the mineral-water producing apparatus, an electrolytic current values for flowing water and standing water X, as a standard, is set (S181). The electrical conductivity of the city water in the water-supply pipe 7 is detected by the conductivity sensor 73 and measured by the controller 61, while the conductivity of the mineral water in the water-delivery pipe 8 is measured by the conductivity sensor 83 (S182). The electrolytic current values for flowing water and standing water X is corrected properly based on the measured conductivity to determine an electrolytic current values for flowing water and standing water Xh (S183). Once the valve of a drink dispenser is opened and the water-flow sensor 81 detects a water flow (S184), flowing water electrolysis is performed based on the electrolytic current values for flowing water and standing water Xh which is determined by the power-output adjustment circuit 63 (S185). After that, once the valve is closed and the feed of mineral water is terminated and no water flow is detected (S186), stop-water electrolysis is performed based on the electrolytic current values for flowing water and standing water Xh (S187). Mineral water is produced by such flowing water electrolysis and standing water electrolysis.

According to the thirteenth embodiment of this invention, the conductivities of both city water and mineral water are measured automatically and synthetically, whereby the concentration of the mineral water produced is made more uniform.

Figures 39 to 41 show a mineral-water producing apparatus in accordance with the fourteenth embodiment of this invention. The same constituents as those of the first embodiment are denoted with the same reference numerals and the description thereof is omitted.

The mineral-water producing apparatus according to this embodiment includes: a pH sensor 71, a water temperature sensor 72 and a conductivity sensor 73 all of which are installed in the water-supply pipe 7; and a water-flow sensor 81, a pH sensor 82 and a conductivity sensor 83 all of which are installed in the water-delivery pipe 8, as shown in Figure 39. And as shown in Figure 40, the detection signals from the sensors 71 to 73 and 81 to 83 are input into the controller 61, the conducting time determining circuit 62 and the power-output adjustment circuit 63 perform correction calculations based on the input signals to control the water-flow conducting time duration and the water-stop conducting time duration of the electrodes 42a, 42b and the electrolytic current values for flowing water and standing water.

In the memory 61d, a standard water-flow conducting time duration T1, a standard water-stop conducting time duration T2 and the standard electrolytic current values for flowing water and standing water X are stored in advance. And a correction calculation circuit is stored in each of the conducting time determining circuit 62 and the power-output adjustment circuit 63 so that they correct the water-flow conducting time duration T1, the water-stop conducting time duration T2 and the electrolytic current values for flowing water and standing water X to obtain a predetermined mineral concentration while judging the solubility of mineral water from the pH, the temperature and the conductivity of the city water and the pH and the conductivity of the mineral water (water-flow conducting time duration T1 → T1m, water-stop conducting time duration T2 → T2m, and electrolytic current values for flowing water and standing water X → Xh).

The mineral-water producing apparatus is constructed as above and the power control of the electrodes 42a, 42b is performed as shown in Figure 41. Specifically, in the mineral-water producing apparatus, a water-flow conducting time duration T1, a water-stop conducting time duration T2, and an electrolytic current values for flowing water and standing water X, as standards, are set (S191). The pH, the temperature and the electrical conductivity of the city water in the water-supply pipe 7 are measured, while the pH and the conductivity of the mineral water in the water-delivery pipe 8 are measured (S192). The electrolytic current values for flowing water and standing water X is corrected properly based on the measured pH, water temperature and conductivity to determine an electrolytic current values for flowing water and standing water Xi. And the water-flow conducting time duration T1 and the water-stop conducting time duration T2 are properly corrected (S193). Once the valve of a drink dispenser is opened and the water-flow sensor 81 detects a water flow (S194), flowing water electrolysis is performed based on the electrolytic current values for flowing water and standing water Xi which is determined by the power-output adjustment circuit 63, and the flowing water electrolysis is performed over the water-flow conducting time duration T1m which is determined by the conducting time determining circuit 62 (S195). After that, once the valve is closed and the feed of mineral water is terminated and no water flow is detected (S196), stop-water electrolysis is performed based on the electrolytic current values for flowing water and standing water Xi and the stop-water electrolysis is performed over the water-flow conducting time duration T2m which is determined by the conducting time determining circuit 62 (S197). Mineral water is produced by such flowing water electrolysis and standing water electrolysis.

According to the fourteenth embodiment of this invention, the pH values, the water temperatures and the conductivities of both city water and mineral water are measured automatically and synthetically, whereby the concentration of the mineral water produced is made more uniform.

Figures 42 to 44 show a mineral-water producing apparatus in accordance with the fifteenth embodiment of this invention. The same constituents as those of the first embodiment are denoted with the same reference numerals and the description thereof is omitted.

In the above described first embodiment etc., proper conducting time duration is obtained by correcting water-flow conducting time duration T1 and water-stop conducting time duration T2 based on the pH, the water temperature, the conductivity, etc. of city water or mineral water. On the other hand, the mineral-water producing apparatus in accordance with this embodiment includes a conducting time duration setting switch SW8 which can arbitrarily set conducting time duration. This conducting time duration setting switch SW8 is a switch that sets flowing water electrolysis time and standing water electrolysis time, and the electrolysis times are input manually. When inputting the electrolysis times through the setting switch SW8, the mineral concentration, the conductivity, etc. of the city water supplied to the accumulating bath 3 are measured ahead of time. When the mineral concentration or the conductivity is high, the electrolysis times are set to be short; conversely, when the mineral concentration or the conductivity is low, the electrolysis times are set to be long. The energization or non-energization of the electrodes 42a, 42b as well as the conducting time duration are controlled through the conducting time determining circuit 62 based on the signals from the water-flow sensor 81 and the setting switch SW8, as shown in the flow chart of Figure 43.

Specifically, a flowing water electrolysis time T1 and a standing water electrolysis time T2 are set based on the setting signals from the setting switch SW8 (S201). After that, once the valve of the dispenser of a drink dispenser (not shown in the figure) is opened (when there is a drink selling signal) and the water-flow sensor 81 detects a water flow (S202), the electrodes 42a, 42b are powered over the time T1 which is determined by the conducting time determining circuit 62 (S203). And once the feed of mineral water is terminated and no water flow is detected (S204), the electrodes 42a, 42b are powered over the standing water time T2 which is determined by the conducting time determining circuit 62 (S205). Mineral water is produced by such flowing water electrolysis and standing water electrolysis.

Thus, according to the fifteenth embodiment of this invention, conducting time duration corresponding to the mineral concentration or the conductivity of city water can be set with the setting switch SW8, whereby the mineral concentration of mineral water can be kept at a desired value.

The above described fifteenth embodiment of this invention is so constructed that both flowing water electrolysis time T1 and standing water electrolysis time T2 can be set and changed; however, in the mineral-water producing apparatus which does not perform electrolysis during water flow, standing water electrolysis time T2 alone is set as shown in Figure 43. Specifically, standing water electrolysis time T2 is set based on the signal from the conducting time duration setting switch SW8 (S211). And after mineral water is conveyed through the water-delivery pipe 8, the electrodes 42a, 42b are powered over the standing water time T2 which is determined by the conducting time determining circuit 62 (S212 to S214).

Figures 45 and 46 show a mineral-water producing apparatus in accordance with the sixteenth embodiment of this invention. The same constituents as those of the first embodiment are denoted with the same reference numerals and the description thereof is omitted.

In the above described eighth embodiment etc., power output values are corrected based on the pH, the water temperature, the conductivity, etc. of city water or mineral water to obtain proper current values. On the other hand, the mineral-water producing apparatus in accordance with this embodiment includes a power-output adjustment switch SW9 which can arbitrarily set power-output values (current value, voltage value). With the power-output adjustment switch SW9, for example, a current value is input manually to energize the electrodes 42a, 42b through the power-output adjustment circuit 63. When inputting a power-output value, the mineral concentration or the conductivity of the city water supplied to the accumulating bath 3 is measured ahead of time. If the mineral concentration or the conductivity is high, the power output is set manually to be small; conversely, if the mineral concentration or the conductivity is low, the power output is set manually to be high.

The energization/non-energization of the electrodes 42a, 42b as well as the power output are controlled through the power-output adjustment circuit 63 based on the signals from the water-flow sensor 81 and the setting switch SW9, as shown in the flow chart of Figure 46.

Specifically, an electrolytic current value X1 is set based on the setting signal from the setting switch SW9 (S221). After that, once the valve of the dispenser of a drink dispenser (not shown in the figure) is opened (when there is a drink selling signal) and a water flow is detected by the water-flow sensor 81 (S222), the electrodes are powered based on the power output which is determined by the power-output adjustment circuit 63 (S223). Then, once the feed of mineral water is terminated and no water flow is detected (S224), the electrodes are powered based on the power output which is determined by the power-output adjustment circuit 63 (S225). Mineral water is produced by such flowing water electrolysis and standing water electrolysis.

According to the sixteenth embodiment of this invention, power output corresponding to the mineral concentration or the conductivity of city water can be set with the setting switch SW9, whereby the mineral concentration of mineral water can be kept at a desired value.

Figure 47 shows a mineral-water producing apparatus in accordance with the seventeenth embodiment of this invention. The same constituents as those of the first embodiment are denoted with the same reference numerals and the description thereof is omitted.

In the mineral-water producing apparatus in accordance with the above described fifteenth embodiment, the mineral concentration of mineral water can be kept at a desired value by arbitrarily setting the conducting time duration of the electrodes 42a, 42b; however, bacteria such as microorganisms might propagate on the mineral eluting materials 41 in the electrolytic bath 4 or in the water-delivery pipe 8 after the long-term use of the apparatus. To prevent such propagation of bacteria, the mineral-water producing apparatus in accordance with the seventeenth embodiment is provided with a cleaning and sterilization switch SW10 in addition to the above described conducting time duration setting switch SW8, as shown in the block diagram of Figure 47. The conducting time duration T3 set through the cleaning and sterilization switch SW10 is longer than the flowing water electrolysis time T1 or the standing water electrolysis time T2 set in the mineral-water producing apparatus in accordance with the fifteenth embodiment so that a larger amount of hypochlorous acid is produced by the electrolysis of water.

Once the cleaning and sterilization switch SW10 is turned on, the electrodes 42a, 42b are powered over the conducting time duration T3. This increases the concentration of hypochlorous acid in the electrolytic bath 4, thereby destroying the bacteria etc. in the electrolytic bath 4. In the case of a drink dispenser, the valve of the dispenser is opened after terminating this energization operation. This allows the electrolyzed water in the electrolytic bath 4 to flow through the water-delivery pipe 8, destroy the bacteria in the water-delivery pipe 8, and be discharged through the dispenser. Once the cleaning and sterilization mode of electrolysis is terminated, the mineral-water producing apparatus is run in mineral-water producing mode again.

Figure 48 shows a mineral-water producing apparatus in accordance with the eighteenth embodiment of this invention. The same constituents as those of the seventeenth embodiment are denoted by the same reference numerals and the description thereof is omitted.

In the above described seventeenth embodiment, cleaning and sterilization of the electrolytic bath 4 and the water-delivery pipe 8 is performed by allowing the conducting time duration T3 to be longer than the flowing water electrolysis time T1 or the standing water electrolysis time T2. However, the mineral-water producing apparatus in accordance with the eighteenth embodiment of this invention has such a construction that the above described mineral-water producing apparatus in accordance with the sixteenth embodiment further includes a cleaning and sterilization switch SW10 which increases the power output for the electrodes 42a, 42b.

When the cleaning and sterilization switch SW10 is turned on, the electrodes 42a, 42b are powered at a power output X 2 which is higher than a power output X1. This increases the concentration of hypochlorous acid in the electrolytic bath 4, thereby destroying the bacteria etc. in the electrolytic bath 4. In the case of a drink dispenser, the valve of the dispenser is opened after terminating this energization operation. This allows the electrolyzed water in the electrolytic bath 4 to flow through the water-delivery pipe 8, destroy the bacteria in the water-delivery pipe 8, and be discharged through the spout.

In the seventeenth and eighteenth embodiments, examples have been taken in which a cleaning and sterilization switch SW10 is applied to the mineral-water producing apparatuses of the above described fifteen and sixteen embodiments. However, it goes without saying that the cleaning and sterilization switch SW10 is applicable to any one of the mineral-water producing apparatuses in accordance with the first to fourteenth embodiments.

### Industrial Applicability

The mineral-water producing apparatus of this invention is useful not only for drink dispensers for business use, that is, drink dispensers for selling drinks, but also for drinking-water feeders designed to improve the quality of drinking water for domestic purpose.

## Claims

1. A mineral-water producing apparatus, which comprising: an electrolytic bath to which raw water, such as city water, is supplied; a mineral eluting material(s) arranged in the electrolytic bath; and electrodes for applying DC voltage with which water in the electrolytic bath is electrolyzed so that a mineral element (s) is eluted from the mineral eluting material(s), where the mineral water produced in the electrolytic bath is delivered to the outside thereof,
wherein the apparatus further comprising:
a water-quality etc. detecting means for detecting the water quality, the water temperature, etc. of at least either the raw water or the mineral water; and
a controlling means for controlling at least either conducting time duration or power output for the electrodes based on the detection signals from the water quality etc. detecting means.

2. The mineral-water producing apparatus according to claim 1,
wherein the water quality etc. detecting means is at least one selected from the group consisting of a pH detecting means for detecting the pH of the raw water supplied to the electrolytic bath or the mineral water produced in the electrolytic bath, a conductivity detecting means for detecting the conductivity of the raw water supplied to the electrolytic bath or the mineral water produced in the electrolytic bath, and a temperature detecting means for detecting the temperature of the raw water supplied to the electrolytic bath.

3. The mineral-water producing apparatus according to claim 1,
wherein a water-delivery pipe for delivering the mineral water produced in the electrolytic bath to the outside thereof is provided with a water-flow detecting means for detecting flow and stop of the mineral water, and that the control means controls power for the electrodes based on flow and stop signals from the water-flow detecting means and on the detection signals from the water quality etc. detecting means.

4. The mineral-water producing apparatus according to claim 2,
wherein a water-delivery pipe for delivering the mineral water produced in the electrolytic bath to the outside thereof is provided with a water-flow detecting means for detecting flow and stop of the mineral water, and that the control means controls power for the electrodes based on flow and stop signals from the water-flow detecting means and on the detection signals from the water quality etc. detecting means.

5. The mineral-water producing apparatus according to claim 1,
wherein the apparatus can be run in a cleaning and sterilization mode of electrolysis in which the water in the electrolytic bath is electrolyzed for a longer conducting time duration or at a higher power output for the electrodes than the conducting time duration or the power output to be controlled based on the detection signals from the water-quality etc. detecting means and the resulting electrolyzed water is delivered to the outside of the electrolytic bath.

6. The mineral-water producing apparatus according to claim 2,
wherein the apparatus can be run in a cleaning and sterilization mode of electrolysis in which the water in the electrolytic bath is electrolyzed for a longer conducting time duration or at a higher power output for the electrodes than the conducting time duration or the power output to be controlled based on the detection signals from the water-quality etc. detecting means and the resulting electrolyzed water is delivered to the outside of the electrolytic bath.

7. The mineral-water producing apparatus according to claim 3,
wherein the apparatus can be run in a cleaning and sterilization mode of electrolysis in which the water in the electrolytic bath is electrolyzed for a longer conducting time duration or at a higher power output for the electrodes than the conducting time duration or the power output to be controlled based on the detection signals from the water-quality etc. detecting means and the resulting electrolyzed water is delivered to the outside of the electrolytic bath.

8. The mineral-water producing apparatus according to claim 4,
wherein the apparatus can be run in a cleaning and sterilization mode of electrolysis in which the water in the electrolytic bath is electrolyzed for a longer conducting time duration or at a higher power output for the electrodes than the conducting time duration or the power output to be controlled based on the detection signals from the water-quality etc. detecting means and the resulting electrolyzed water is delivered to the outside of the electrolytic bath.

9. A mineral-water producing apparatus, which comprising: an electrolytic bath to which raw water, such as city water, is supplied; a mineral eluting material(s) arranged in the electrolytic bath; and electrodes for applying DC voltage with which water in the electrolytic bath is electrolyzed so that a mineral element(s) is eluted from the mineral eluting material (s), where mineral water is produced at least either in a flowing water electrolysis mode, in which a DC voltage is applied across the electrodes while delivering the water from the electrolytic bath, or in a standing water electrolysis mode, in which a DC voltage is applied across the electrodes while stopping the water from the electrolytic bath,
wherein said apparatus further comprising:
a setting switch which sets at least either conducting time duration or power output for the electrodes in each of the electrolysis modes.

10. The mineral-water producing apparatus according to claim 9,
wherein the apparatus can be run not only in the flowing water electrolysis mode and in the standing water electrolysis mode, but also in a cleaning and sterilization mode of electrolysis in which the water in the electrolytic bath is electrolyzed for a longer conducting time duration or at a higher power output than in the flowing water electrolysis mode and in the standing water electrolysis mode and the resulting electrolyzed water is delivered to the outside of the electrolytic bath.

11. The mineral-water producing apparatus according to claim 1,
wherein an electrolytic auxiliary agent consisting of an electrically conductive material is arranged in the electrolytic bath.

12. The mineral-water producing apparatus according to claim 2,
wherein an electrolytic auxiliary agent consisting of an electrically conductive material is arranged in the electrolytic bath.

13. The mineral-water producing apparatus according to claim 3,
wherein an electrolytic auxiliary agent consisting of an electrically conductive material is arranged in the electrolytic bath.

14. The mineral-water producing apparatus according to claim 4,
wherein an electrolytic auxiliary agent consisting of an electrically conductive material is arranged in the electrolytic bath.

15. The mineral-water producing apparatus according to claim 5,
wherein an electrolytic auxiliary agent consisting of an electrically conductive material is arranged in the electrolytic bath.

16. The mineral-water producing apparatus according to claim 6,
wherein an electrolytic auxiliary agent consisting of an electrically conductive material is arranged in the electrolytic bath.

17. The mineral-water producing apparatus according to claim 7,
wherein an electrolytic auxiliary agent consisting of an electrically conductive material is arranged in the electrolytic bath.

18. The mineral-water producing apparatus according to claim 8,
wherein an electrolytic auxiliary agent consisting of an electrically conductive material is arranged in the electrolytic bath.

19. The mineral-water producing apparatus according to claim 9,
wherein an electrolytic auxiliary agent consisting of an electrically conductive material is arranged in the electrolytic bath.

20. The mineral-water producing apparatus according to claim 10,
wherein an electrolytic auxiliary agent consisting of an electrically conductive material is arranged in the electrolytic bath.
